# EUROPEAN PATENT SPECIFICATION

(11) **EP 0 693 251 B1**
(45) Date of publication and mention of the grant of the patent: **19.12.2001**
(21) Application number: 95201912.3
(22) Date of filing: 12.07.1995
(51) Int. Cl.: A01C 17/00

(54) **An implement for spreading granular and/or pulverulent material**
Gerät zum Streuen von körnigem und/oder staubigem Material
Outil pour épandre un matériau granuleux et/ou pulvérulent

(30) Priority: 22.07.1994 NL 9401205; 24.03.1995 NL 9500565
(43) Date of publication of application: 24.01.1996
(73) Proprietor: MAASLAND N.V., 3155 PD Maasland (NL)
(72) Inventor: Bom, Cornelis Johannes Gerardus, NL-3181 VC Rozenburg (NL); van der Vlugt, Hendrik Hans, NL-3155 VK Maasland (NL); van der Waal, Pieter Jacob, NL-3145 LB Maassluis (NL)
(74) Representative: Corten, Maurice Jean F.M.

(56) References cited:
- EP-A- 0 273 488
- EP-A- 0 303 325
- EP-A- 0 545 894
- GB-A- 1 493 525
- GB-A- 2 158 336
- US-A- 2 676 695

## Description

The present invention relates to an implement for spreading granular and/or pulverulent material, especially for spreading fertilizers, which implement comprises both a hopper provided with at least one outlet opening and at least one spreading member, where the outlet opening is capable of being further closed or opened at choice by a metering slide which is capable of moving forward and backward along a hopper wall comprising the outlet opening and of being put into one of at least two positions at choice. The metering slide under pressure abuts against the wall and extends to beyond the wall (see GB-A-2 158 336).

The invention has for its objective to provide that the metering slide remains capable of being easily moved along the outlet opening for closing or opening it to any extent at choice. According to the invention, this is achieved by that the metering slide outside the wall, under pressure abuts against the curved side of a sector-shaped support, and is capable of rolling on the curved side as it moves along the outlet opening during adjustment. Hereby a sound and convenient construction is obtained, so that the operation of the metering slide is smooth and exact. An advantageous embodiment of the construction according to the invention is obtained when the metering slide is connected to the sector-shaped support by means of a connecting member, where the sector-shaped support mounted on an adjusting shaft is capable of pivoting for moving the metering slide.

According to a further exemplary embodiment of the invention, the adjusting shaft is coupled to an adjusting mechanism, by means of which the discharge of the desired amount of material per unit of time from the hopper to the spreading device is controllable by setting at choice the size of passage of the outlet opening through opening or closing this outlet opening to a larger or smaller extent by means of the metering slide.

In a further construction of the implement according to the invention, the sector-shaped support is U-shaped, the legs of the U being two sector-shaped supporting plates whose curved sides each abut against the metering slide. An appropriate support for the metering slide is obtained in this manner, where a correct position of the metering slide relative to the outlet openings is easily maintainable. According to the invention, the guiding of the metering slide can further be influenced favourably when the metering slide is provided with a protrusion which constitutes a guide member located in a groove formed between the wall and a supporting part provided thereon.

According to a further exemplary embodiment of the implement according to the invention, the implement comprises at least two spreading members, each corresponding with an outlet nozzle of the hopper comprising at least one outlet opening, where the metering slides, each of which operates in conjunction with the outlet openings in the respective outlet nozzles, abut against the respective walls and against the curved side of a sector-shaped support, where the sector-shaped supports of the two metering slides are coupled to one and the same adjusting shaft and are simultaneously adjustable by this adjusting shaft. In this manner, it is feasible to keep the operation of the metering slides simple. With this, the volume control to the two spreading members through the two nozzles can be effected in an advantageous manner. An advantageous embodiment of the invention is achieved when the two spreading members and the corresponding outlet openings are shaped and arranged, and the spreading members are made to rotate such that the two spreading members each broadcast material over the same strip when the implement during operation travels over the surface area to be covered.

The adjustment of the supply from the hopper to the spreading member can advantageously be influenced when, according to the invention, in a further embodiment of the invention, the side of the metering slide which operates in conjunction with the outlet opening for the purpose of closing or opening the latter by a certain amount is provided with recesses or indentations which form, at least after partial closure of the outlet opening, in combination with parts of the sides of the outlet opening, two or more small passages situated side by side. In this manner, it is feasible to perform the supply of small quantities of material per unit of time to the spreading members such that also relatively small quantities of material are evenly distributed over the desired width in an advantageous manner. A preferred embodiment of the invention is obtained when the indentations, as viewed at right angles to the metering slide, are V-shaped, where the two divergent sides of the V-shape facing the closing side of the outlet opening are disposed such that, when the outlet is being closed, the deepest located portion of each indentation moves past the closing side of the outlet opening. According to a preferred embodiment of the implement according to the invention, the metering slide comprises three indentations, the central one of which has a smaller width than the two adjoining indentations which have an approximately equal width.

A suitable reception by the spreading member of material flowing from the hopper can be favourably influenced when the spreading member comprises at least one spreading blade whose inner end part, which faces the axis of the spreading member and during operation passes by an outlet opening, is lower than the outer part of the spreading blade turned away from the rotary axis. Here, the lower part of the spreading blade is capable of receiving the material in an advantageous manner, whereas the outer part of the spreading blade is capable of feeding the material towards the perimeter of the spreading member in an advantageous manner so as to spread or broadcast the material as favourably as feasible.

The supply of material from the hopper to the spreading member can be channelled favourably when, in between the wall part in which the outlet opening is provided and the spreading member, there is disposed a guard flange which extends at least approximately round a part of the outlet opening, as viewed from above. Moreover, it can be advantageous that the guard flange has its top side at least approximately connected to that side of the outlet opening which is averted from the rotary axis of the spreading member or the centre of the outlet nozzle. Herewith, at a suitable distance from the rotary axis, the material can be delivered to the spreading member in an advantageous manner. The construction with the guard flange is further capable of being favourably influenced when, in downward direction, the guard flange diverges from the rotary axis of the spreading member and has its lower edge situated at a short distance above the top side of the lowered inner part of a spreading blade. In this way, it is possible to distribute the material suitably over the spreading member and the spreading blades attached to it.

According to the invention, the supply of material through the outlet openings to the spreading member can be kept constant in a favourable manner when, near the outlet opening in the outlet nozzle, there is provided a stirring member which is rotatably mounted on an axle connected eccentrically to the shaft of the spreading member, where the stirring member comprises stirring means extending essentially vertically in the outlet nozzle of the hopper. The stirring means are capable of keeping the material loose in an advantageous manner, without adversely affecting the material as regards its granular structure. A preferred embodiment of the invention is obtained when the stirring means are triangular in section and, by means of carrying arms, are connected to a carrying member rotatably mounted on the axle.

The spreading of material by the spreading member can be favourably influenced when, round at least a part of the spreading member, there is provided a guide flange and on the top side of this flange there is situated a guard plate extending at least over a portion of the top surface of the spreading member. In maintaining a good distribution by the spreading member a favourable effect is further obtained when a flexible guide flange directed downwards is placed on the adjusting shaft for the sector-shaped supports, where this flexible guide flange extends from the adjusting shaft to beyond the front of the guide plates and/or the sector-shaped supports. Influences from flows of air round the spreading member, which might adversely affect the appropriate distribution, are thus obviated. Accordingly, the material being distributed by the spreading members cannot leave the implement in any undesired manner.

The invention will now be further explained with reference to the accompanying drawings of an advantageous embodiment of the implement according to the invention, in which drawings:
Figure 1 shows a side view of the exemplary embodiment of the implement according to the invention;
Figure 2 is a plan view of a part of the implement taken in the direction of arrow II of Figure 1;,
Figure 3 is a sectional view in elevation of a part of the implement taken on the line III-III of Figure 2;
Figure 4 is an enlargement of a part of Figure 2;
Figure 5 is a plan view of a stirring member in the hopper, and under the hopper, a guard provided at the outlet opening, and a supporting member;
Figure 6 is a sectional view in elevation of the guard and the supporting member for the metering slide;
Figure 7 shows a side view of the locking mechanism for the metering slides, and
Figure 8 shows a top view of this locking mechanism.

The implement shown in the drawings is an implement which, for spreading granular and/or pulverulent material over a surface area, is propelled over this area. The invention particularly relates to a fertilizer spreader for broadcasting fertilizer over agricultural lands.

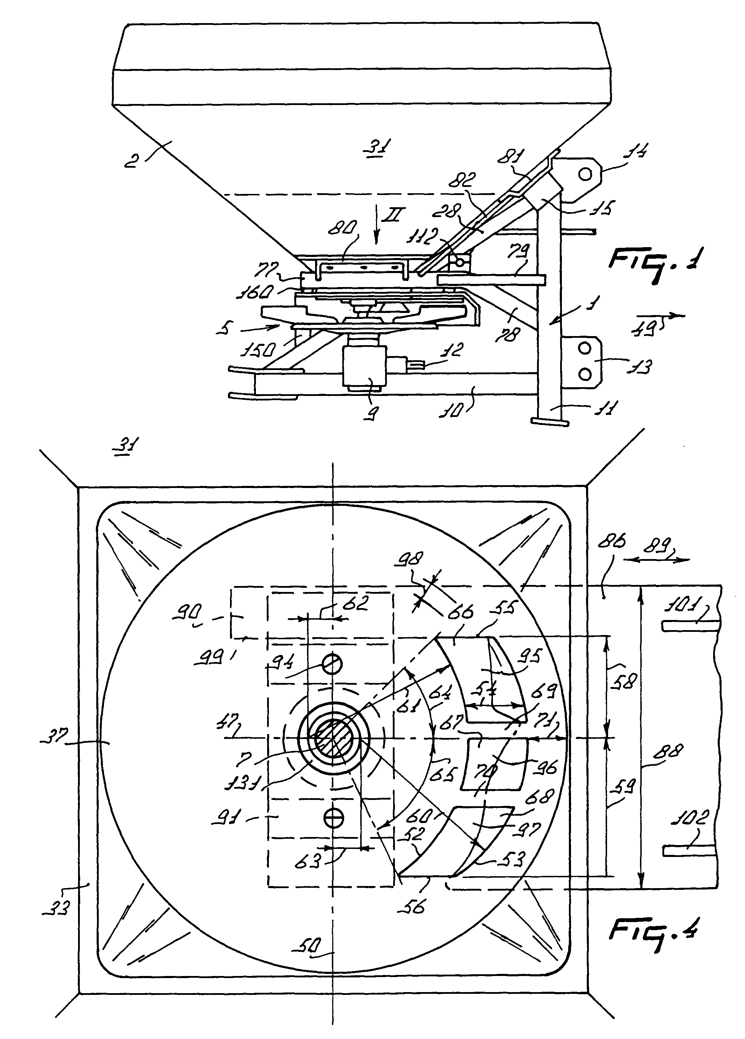

The implement comprises a frame 1, on which a hopper 2 is mounted. The hopper comprises two nozzles 3 and 4. A spreading member 5 and a spreading member 6 is disposed under the respective nozzles. The spreading members 5 and 6 are mounted on shafts 7 and 8, respectively. These shafts 7 and 8 are bearing-supported in gearboxes 9, of which only one is shown in the drawings. The gearboxes 9 are mounted on two supporting beams 10 disposed in a V with respect to each other and having their front ends attached to main frame beams 11 of the frame 1. When the implement is in a horizontal position, the main frame beams 11 extend vertically, while, viewed transversely to the direction of travel of the implement, they are at a certain mutual distance. The supporting beams 10 converge from the main frame beams 11 rearwards and their rear ends are interconnected. The gearboxes comprise conical gear transmissions connected with the respective shafts 7 and 8. The gear transmissions provided in the gearboxes 9 are connected with each other by means of a connecting shaft provided between the two gearboxes. This connecting shaft is coupled to a drive shaft 12. During operation of the implement, the drive shaft 12 can be connected with the power take-off shaft of a tractor or similar vehicle, to which the implement is coupled during operation. For this coupling to the tractor or other similar vehicle, the frame is provided with, firstly, two coupling members 13 which are connectable with the bottom links of the power lift of the tractor and, secondly, a coupling member 14 connectable with the top link of the power lift of the tractor. The coupling member 14 is attached to a cross beam 15 which interconnects the upper ends of the main frame beams 11. As is apparent from Figure 1, the front side of the hopper 2 is attached to the cross beam 15.

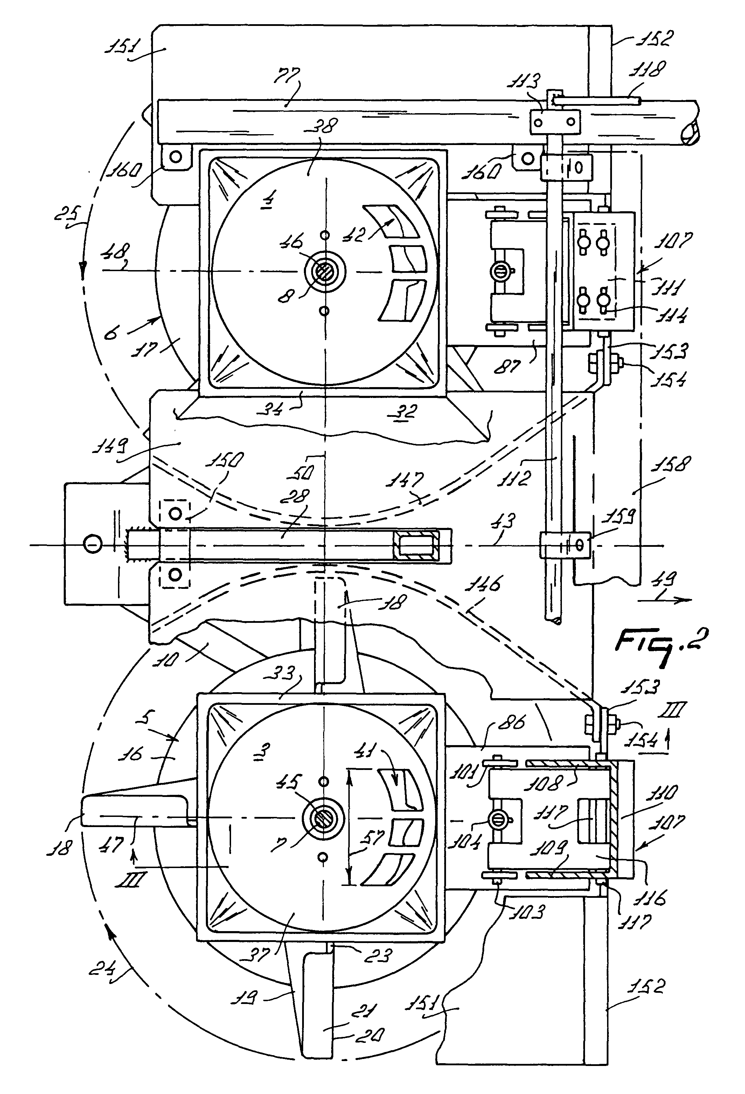

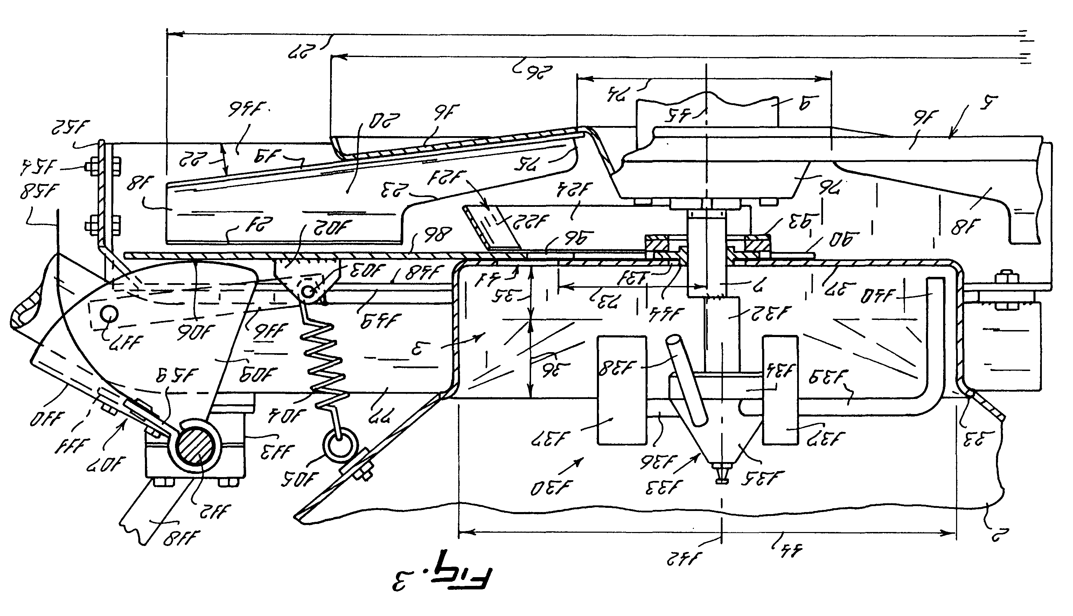

In this embodiment of the invention, the two spreading members 5 and 6 each comprise a broadcasting plate, 16 and 17 respectively, which is round and equipped with spreading blades 18. In the present embodiment, each spreading member comprises four spreading blades in a uniform angular arrangement round the respective shafts 7 and 8 of the spreading members 5 and 6. The spreading blades [also called throwing blades] extend at least essentially radially with respect to the relevant broadcasting plate shaft. The spreading blades extend to beyond the circumference of the broadcasting plate 16, as shown (Figure 3) with regard to the spreading member 5. The spreading blades of each spreading member are mutually identical and each of them comprises a lower flange 19. These lower flanges are parallel to, and are mounted to the top surface of the broadcasting plate 16 which is - as is also the case in the present exemplary embodiment - preferably conical at a small angle 22 of e.g. approximately 5° and, as counted from the centre of the spreading member outwards, extends upwardly. As shown in Figure 2, each lower flange 19 tapers off, from a relatively wide part which is relatively close to the centre of the spreading member to the end of the blade. The top sides of the spreading blades each comprise an upper flange 21 extending perpendicularly to the relevant rotary axis. This upper flange has a constant width over its full length (Figure 2), this width being equal to that of the outer end of the lower flange 19. The lower flange 19 and the upper flange 21 of each spreading blade face forwards in relation to the respective directions of rotation 24 and 25 of the spreading members 5 and 6. Each spreading blade has an upright wall 20 which extends straight up in the present embodiment, but which can also be slightly curved. The upper flange 21 extends over approximately half the length of the spreading blade. The upper flange 21 runs from a position within the perimeter of the broadcasting plate to the spreading blade end situated out of this perimeter. Starting from the inner end of the upper flange 21, the wall 20 is reduced in height. In the place of the inner end of the upper flange 21, the height of the blade is reduced by approximately 50%. Herewith, a lowered top side 23 of the wall 20 has been formed essentially parallel to the top side of the broadcasting plate 16. Accordingly, the top side 23 runs obliquely downwards in the direction of the shaft of the spreading member. The broadcasting plate of each of the spreading members has a diameter 26. The ends of the spreading blades are on a circle of diameter 27 concentric with the shaft of the spreading member, where this diameter is approximately 1.25 times the diameter 26 of the broadcasting plate.

The spreading members 5 and 6 are carried by the supporting bracket part made up by supporting beams 10. On the rear side of the supporting beams 10, the supporting bracket part is connected with the cross beam 15 by means of a stay 28.

The hopper 2 comprises two, in relation to the direction of travel 49 transversely separated, funnel-shaped parts 31 and 32, whose lower ends are connected with the respective top edges 33 and 34 of the outlet nozzles 3 and 4. The outlet nozzles 3 and 4 are mutually identical and, hence, only the outlet nozzle 3 will be further described, particularly with reference to Figures 3 and 4. The outlet nozzles 3 and 4 are cylindrical as regards the lower part 35, and, from this cylindrical part 35 upwards, the upper part 36 is a transition from a circular to a rectangular shape such that the top edges 33 and 34 of the respective outlet nozzles 3 and 4 fit the rectangular bottom ends of the funnel-shaped parts 31 and 32 which converge in downward direction, which are rectangular as viewed in horizontal cross-section, and which are in the shape of an inverted pyramid.

Each of the outlet nozzles 3 and 4 has a bottom 37 or 38 which is horizontal when the machine is in a horizontal position. The bottoms 37 and 38 constitute wall parts of the walls enclosing the hopper volume. The outlet nozzles 3 and 4 each have an outlet opening 41 and 42 respectively, with these outlet openings being mutually equal and being disposed such that they are each other's mirror image in relation to the centre plane 41 of the implement. The respective outlet openings 41 and 42 have three separate passage parts each. The bottom ends [also called lower parts] 35 of the outlet nozzles 3 and 4 have an inner diameter 44 which is approximately 280 mms in the present exemplary embodiment, but which may also be somewhat larger or smaller. The centre line of this cylindrical bottom end 35 of the outlet nozzle coincides with that of the respective funnel-shaped part 31 or 32 of the hopper. These centre lines 45 and 46 also coincide with the centre lines of the spreading members or their shafts 7 and 8, respectively. The rotary axes 45 and 46 [also called centre lines] lie at equal distances from the centre plane 43 and in planes 47 and 48 comprising the rotary axes of the spreading members or the centre lines of the outlet nozzles 3 and 4, and extending parallel to the centre plane 43, and running parallel to the normal direction of travel 49 of the implement during operation.

In relation to the normal direction of travel 49 of the implement, the outlet openings 41 and 42 in each of the outlet nozzles are situated in front of the transverse plane 50 comprising the centre lines 45 and 46 of the bottom parts 37 of the outlet nozzles. The bottom parts 37 and 38 of the two outlet nozzles extend perpendicularly to the centre lines 45 and 46, or the axes of rotation of the spreading members 5 and 6. The outlet openings 41 and 42 are mutually identical, and therefore only the outlet opening 41 will be further described. The outlet openings 41 and 42 are curved round the centre lines of the respective bottom parts. The outlet opening 41 has a curved inner side 52 and a curved outer side 53. These sides are at a mutual distance 54 which is constant over the length of the outlet opening enclosed by two short, mutually opposite sides 55 and 56. These short sides 55 and 56 are mutually parallel as well as parallel to the longitudinal plane 47. The outlet opening 41 has a width 57, as measured between the short sides 55 and 56, which is approximately equal to half the diameter of the bottom 37. On both sides of the longitudinal plane 47, the opening 41 extends over distances 58 and 59. The distance 59 is slightly greater than the distance 58. The distance 59 is on that side of the plane 47 which is different from the side of the centre plane 43. The sides 52 and 53 each are curved round a point which is in the longitudinal plane 47 and on the upper side of the bottom 37. The radius 60 of the inner side 52 equals the radius 61 of the outer side 53, where the centres of these radii are situated at distances 62 and 63, respectively, on opposite sides of the centre line 45. An imaginable curve situated centrally between the curved sides 52 and 53 and being parallel to these sides has its centre on or near the centre line 45. The distance 62 is behind, and the distance 63 is before the centre line 45, as considered in relation to the normal direction of travel 49 of the implement during operation. On both sides of the plane 47, the outlet opening 41 extends over angles 64 and 65 round the centre line 45, where the angle 64 is slightly smaller than the angle 65. The outer side 53 of the outlet opening is at a distance 71 from the inner side of the circumference of the cylindrical part 35 of the outlet nozzle. The distance 71 is virtually equal to, or, such as in the present embodiment, only slightly shorter than the distance 54 between the curved sides 52 and 53 of the outlet opening.

In this exemplary embodiment of the invention, each of the outlet openings 41 and 42 consists of three, mutually separate parts forming passages 66, 67 and 68. These relatively small passages are mutually separated by two bottom strips 69 and 70, which extend between the opposite curved edges (or sides) 52 and 53. The passage parts 66 and 68 are virtually identical. The passage part 67 is considerably smaller than the parts 66 and 68. The passage part 67 extends over a part of the arcs 52 and 53 which is approximately half as large as the approximately mutually equal parts of the arc 52 and 53 over which the outlet openings 66 and 68 extend. The passage part 66 is entirely on one side of the plane 47, whereas the parts 67 and 68 are virtually completely on the other side of this plane. The passage part 66 is situated on that side of plane 47 which faces the plane 43.

Corresponding parts of the outlet opening 42 in the outlet nozzle 4 are indicated by the same reference numbers as used with the outlet opening 41, because of the fact that these openings are identical and are symmetrically situated in relation to the centre plane 43 of the implement.

Viewed parallel to the rotary axes of the spreading members, or the centre lines of the outlet nozzles, the outlet openings 41 and 42 are situated above the disc-shaped parts or broadcasting plates 16 of the spreading members 5 and 6. The diameter 44 of the nozzles is smaller than that of the discs 16. The curved side 52 is at a distance 73 from the rotary axis of the spreading member located under the relevant opening, which distance is greater than half the diameter 74 at which the inner ends 75 of the spreading blades are concentrically disposed round the axis or centre line 45. Viewed parallel to the axis 45, the outlet opening 41 is above the lowered parts of the spreading blades. The spreading blade ends 75 connect, through a short distance, to a raised, in this exemplary embodiment a conical, central part 76 attached to the shaft 7. The central part 76 is within the distance 73 (Figure 3).

Near the bottom parts 37 and 38 of the outlet nozzles, the hopper 2 is supported by hopper supports 77. With the machine being in a horizontal position, these supports are horizontally oriented and they extend perpendicularly to the main frame beams 11. The hopper supports 77 are on mutually opposite sides of the outlet nozzles and, as viewed in the direction of travel 49, they are behind the main frame beams 11. The hopper supports 77 are connected with the main frame beams 11 by means of bent parts 78 directed downwardly, the arrangement being as is clearly shown in Figure 1. The attachment of the hopper supports 77 to the main frame beams 11 is stiffened by supporting rods 79. The connection between the hopper and the hopper supports 77 comprises brackets 80 which are fastened to the hopper wall and the hopper supports 77. Moreover, the hopper 2 has its front connected to the cross beam 15 by means of brackets 81. In between the brackets 81 and the hopper supports 77, virtually in the same plane as the main frame beams 11 and the hopper supports 77, there are provided braces 82.

Close to the outlet openings 41 and 42 there are provided metering slides 86 and 87, respectively, by means of which the outlet openings can be optionally opened or closed to any extent. In this exemplary embodiment of the invention, the metering slides 86 and 87 lie against the respective undersides of the bottoms 37 and 38 of the outlet nozzles 3 and 4 of the hopper 2. The metering slides 86 and 87 are placed symmetrically to the centre plane 43 and in relation to this plane they are symmetrical in shape. Because the metering slides 86 and 87 are identical, their shape will be further explained with reference to the metering slide 86. The metering slide 86 has a width 88 which is greater than the width 57 of the outlet opening 41. To be able to open or close the respective outlet openings 41 and 42 to any extent at choice, the metering slides 86 and 87 are mounted in the frame such that they are capable of reciprocating in a direction as indicated by the arrow 89. This reciprocating motion 89 is parallel to the normal direction of travel 49 of the implement during operation and also parallel to the centre plane 43 of the implement.

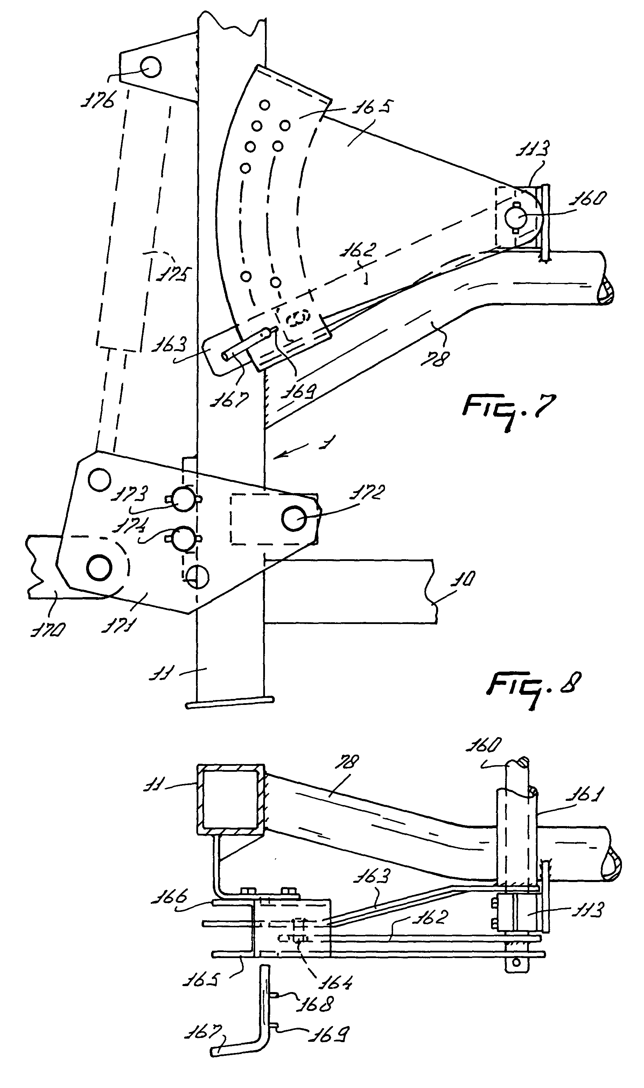

The metering slide 86 is provided with a finger-shaped support 90 (Figures 4 and 6) which is movably mounted between the underside of the bottom 37 and a supporting part 91. The supporting part 91 is made of synthetic material, e.g. nylon, and, when viewed from above, it is rectangular. The long sides extend perpendicularly to the directions 49 and 89. The guide support 90 is in a groove 92 formed on the top surface corner side and along the short side of the supporting part 91. The underside of the supporting part 91 is covered and supported by a metal plate 93 which is attached to the bottom 37 by means of the fastening bolts 94 for the supporting part 91. The guide support 90 extends in the direction of motion 89. The side 99 of the support 90 is parallel to the side 55 of the outlet opening 41. Viewed from above (Figure 4), the side 99 coincides with the side 55 or its extension.

The side of the metering slide 86 which operates in conjunction with the outlet opening 41 is provided with three indentations 95, 96 and 97. These indentations work in conjunction with the passages 66, 67 and 68, respectively. In principle, the widths of the indentations 95, 96 and 97 virtually correspond with the widths of the respective passages 66, 67 and 68. Measured along the curved sides 52 and 53, the indentations 95, 96 and 97 according to the invention are as shown in Figure 4. Both the deepest and the least deep portions of the indentations 95, 96 and 97 lie at least approximately on a relevant imaginary curve running parallel to the curved sides 52 and 53. The width 88 of the metering slide 86 is such that the outlet opening 41 in the transverse direction is fully covered by the slide when the outlet opening is partly or fully closed.

Beyond the perimeter of the outlet nozzle 3, the metering slide 86 is provided with two lugs 101 and 102, in which a shaft 103 is bearing-supported. At half its length, the shaft 103 is coupled to an extension spring 104 which extends from the shaft 103 upwardly and is connected with an attaching eye 105 provided on the front of the hopper 2. The spring 104 exerts such a tractive force on the shaft 103, and consequently on the slide 86, that the top surface of the slide, as for the portion situated under the bottom 37, is drawn to and against this bottom 37. The portion of the slide which is on the other side of the lugs 101 and 102 and the shaft 103 than the portion which abuts against the bottom 37 bears against curved sides 106 of a sector-shaped support 107. In a sectional plan view, the support 107 is U-shaped and comprises two side plates 108 and 109 and a central part 110 interconnecting the side plates 108 and 109. The central part 110 is bolted to a mounting strip 111 rigidly attached to an adjusting shaft 112. The side plates 108 and 109 with their curved sides 106 are centrically located round the centre line of the adjusting shaft 112. The shaft 112 is supported in bearings 113 disposed on the two hopper supports 77, the arrangement being as is further shown in Figures 2 and 3. The shaft 112 is mounted in the bearings 113 for rotation about its own longitudinal axis. The shaft 112 is secured against motion in longitudinal direction in relation to the bearings 113. The central part 110 is provided with slotted holes 114 to enable the sector-shaped supports 107 to be adjusted parallel to the adjusting shaft 112. The supports 107 can thus be adjusted correctly with respect to the metering slides when they are coupled with them.

The metering slide 86 is hinge-connected with the sector-shaped support 107. To this end, the shaft 103 is by means of a connecting member 116, H-shaped in a plan view, connected with a hinge shaft 117 which extends between the side plates 108 and 109 and is mounted in these plates. The legs of this H are provided with holes, through which the respective shafts 103 and 117 extend such that these shafts are bearing-supported in the relevant legs of the H-shaped connecting member and are capable of rotating in relation thereto.

The adjusting shaft 112 is provided with an adjusting arm 118 which is connected with an adjusting mechanism in a manner not further indicated. The nature of the adjusting mechanism is optional, for instance, the adjusting mechanism is manually operated or controlled by e.g. a computer. This adjusting mechanism serves to move, in the manner as desired, the slide 86 and the corresponding slide 87 in one of the directions of forward/backward motion for further closing or opening the respective outlet openings 41 and 42, as the case may be, through the mentioned connection between the adjusting arm 115 via the adjusting shaft 112 and the sector-shaped supports 107. The slide 87 is arranged and connected with the adjusting shaft 112 in the same way as is described with regard to the slide 86. Accordingly, corresponding parts are indicated by the same reference numbers. In respect of their situation and further design, the metering slides 86 and 87 with their connecting members 116 and the adjusting shaft 112 are of a symmetrical form with respect to the centre plane 43.

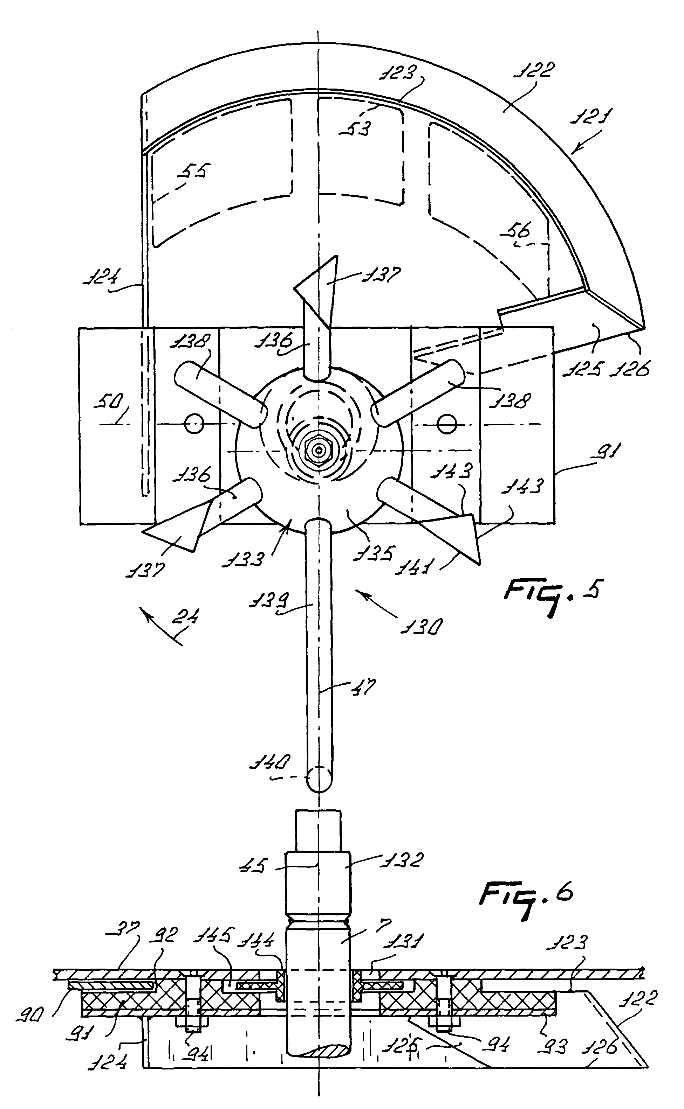

Between the bottom wall parts 37 and 38 and the spreading members 5 and 6 situated under them, there are provided guard members in the form of guard flanges 121. The guard flanges are placed under the outlet nozzles 3 and 4, where they connect to the perimeter of the outlet openings 41 and 42, respectively. The guard members 121 under the respective outlet nozzles 3 and 4 are symmetrical with respect to the longitudinal plane 43. In view of this, the shape of a guard member disposed under the outlet nozzle 3 will be further detailed, especially with reference to Figure 5. The guard member 121 comprises a curved part 122 designed as a guard flange, whose top side (or edge) 123 connects to the underside of the perimeter of the outlet openings or the metering slide 86 being under them. Here, the top edge 123 is at approximately the same level as the horizontal side of the groove 92 in which the finger-shaped support 90 of the metering slide is placed. The edge 123 of the curved guard part is just outside of the perimeter curve 53 of the outlet opening 41 indicated by a dash line in Figure 5. The guard part 122 extends from the top edge obliquely downwards such that it diverges from the rotary axis 45, as is in particular apparent from Figure 6. Near the side 55 of the opening 41, the curved guard part 122 connects to a straight guard part 124 situated next to the side 55 and out of the opening 41, as seen in a plan view. When the machine is in a vertical position, the [straight guard part, or] flange 124 extends vertically and is oriented parallel to the plane 47. The [straight guard part, or] flange 124 extends from the curved guard part 122 rearwards to underneath the finger-shaped support 90 and to beyond the transverse plane 50. At the other end of the curved guard part 122 which extends to just beyond the edge 56 of the opening 41, the curved guard part 122 connects to a slightly radially oriented guard part 125. The part 125 constitutes a guard flange which is directed obliquely downwards from top to bottom. The guard part 125, as is shown in a plan view (Figure 5), is directed obliquely downwards and away from the opening 41. As is apparent from Figures 5 and 6, the guard member 121 is connected with the bottom 37 through the ends of the guard parts 124, 125 fastened to the underside of the plate 93. The guard member 121 reaches downwards, from the top side connecting with the underside of the metering slide 86 to a level just higher than the central part 76 of the spreading member and to a short distance from the top edge 23 of the spreading blades. This distance from the underside of the guard member to the top edges 23 of the spreading blades mounted on the spreading member will amount to a few millimetres, e.g. 3 mms. This distance shall not be less than is necessary to keep clear of the top edges 23 and will be at most about 6 mms. The lower edge 126 of the radial guard part 125 is essentially radial to the rotary axis of the spreading member situated under the relevant outlet part of the hopper, as is apparent from Figure 5. As is also shown in Figure 5, the radial guard part 125 is also directed obliquely downwards such that the curved guard part 122 and the guard part 125 diverge from each other. The guard parts 124 and 125, whose ends are attached to the underside of the plate 93, have their top edges which are situated out of the supporting part 91 at the same level as the edge 123 and they also connect to the underside of the metering slide 86, especially when the outlet opening 41 is shut off by the metering slide.

In the bottom zone of the hopper, especially in the outlet nozzles 3 and 4, there are provided delivery members in the shape of stirring members which keep the material loose in the outlet nozzles during operation, thus preventing the outlet nozzles from becoming clogged. These delivery members 130 disposed in the outlet nozzles 3 and 4 are identical to each other and are symmetrically arranged with respect to the centre plane 43. Therefore, only the stirring member 130, as installed in the outlet nozzle 3 and particularly depicted in Figures 3 and 5, will be further described. Figure 5 shows a plan view of the stirring member together with the supporting part 91 and the guard member 121. The location of the guard member 121 and that of the stirring member 130 in relation to the outlet opening are further shown by the latter being drawn in dash lines in Figure 5.

As is apparent from Figures 3 and 6, the shaft 7 of the spreading member 5 is led through a hole 131 in the bottom 37. The shaft 7 is at its upper end provided with an eccentric shaft 132 disposed eccentrically with respect: to the rotary axis 45, which eccentric shaft 132 is fixed to the shaft 7. On the upper end of the eccentric shaft 132, which is approximately at the level of the top edge of the outlet nozzle 3, the stirring member 130 is rotatably mounted. The stirring member 130 comprises a carrier 133 which has a cylindrical lower part 134 and a conical part 135 tapering towards the top. The carrier 133 is capable of rotation about the eccentric shaft 132 constituting an axle for the stirring member. Equally distributed round the lower end of the conical part 135 there are provided three carrying arms 136 with stirring means 137 fastened to their ends. These means 137 are triangular in section and in plan view. The means 137 extend vertically, reaching to a height slightly higher than half the height of the conical part 135 and reaching to a depth beyond the lower end of the carrier 133. The lower ends of the stirring means 137 are at approximately half the height of the outlet nozzle 3. The top sides of the stirring means 137 extend in the lower zones of the funnel-shaped parts 31 of the hopper. The carrying arms 136 are at the height of the top of the outlet nozzles 3. Centrally between two adjoining carrying arms 136, two stirring arms 138 are fitted on the carrier 133. At the level of the underside of the conical parts 135, these stirring arms are attached thereto and extend downwardly parallel to this conical surface. The lower ends of these stirring arms 138 are at approximately the same level as the lower ends of the stirring means 137. Centrally between two carrying arms 136 where no stirring arm 138 is provided, there is provided a stirring arm 139. This stirring arm 139 extends horizontally from the lower end of the conical part 135 to near the top edge of the outlet nozzle 3. In this position at the top edge, the stirring arm has a bent-down part 140 which reaches to just above the bottom 37 of the outlet nozzle 3 and which is parallel to the cylindrical wall part of the outlet nozzle 3, the arrangement being as is shown by Figure 3. As is apparent from Figure 5, the triangular shape of the stirring means 137, as seen in a plan view, includes a side 141 which is virtually radial to the centre line 142 of the stirring member. The two remaining sides 143 of the stirring means are equal, so that the two sides 143 and the bottom side 141 make up an isosceles triangle. In a plan view (Figure 5), the bottom sides 141 are before the sides 143 in relation to the direction of rotation 24 of the spreading member 5.

Round the mutually facing sides of the two spreading members 5 and 6 there are provided guide flanges 146 and 147. The guide flanges 146 and 147 are situated round a part of the circumference of the spreading members, as is apparent from Figure 2. Their rear parts reach to beyond the rear side of the outlet nozzles 3 and 4, while their front parts reach to beyond the front side of the spreading members. On top of the guide or guard flanges 146 and 147 there is provided a guard plate 149 which extends between the outlet nozzles 3 and 4 and over approximately the same length as indicated with regard to the guide flanges 146 and 147. The guard plate 149 extends horizontally and it is bent down on the front side, where this front part, in common with the guard flanges 146 and 147, extends downwards as far as the level of the underside of the broadcasting plate 16. The guard plate 149 and the top edges 148 of the guide flanges 146 and 147 are at a level slightly above the underside of the outlet nozzles 3 and 4. The guard flanges 146 and 147 and the guard plate 149 are attached to a support 150 disposed on the lower end portion of the stay 28. On the side of the metering slide 86 not facing the other metering slide 87 as well as on the side of the metering slide 87 not facing the metering slide 86 there is provided a side guard plate 151, which is at the same level as the guard plate 149 and extends longitudinally parallel to the plane 43 over the same distance as the guard plate 149 and the guide flanges 146 and 147. On the front, the side guard plates have front sides 152 which are directed downwards and which extend over the same height as the guard flanges 146 and 147, the arrangement being as is shown in Figure 3. Attached to the front side 152 there are projections 153, through which the side guard plates 151 are fastened to the fronts of the guard flanges 146 and 147 by means of bolts 154. The side guard plates 151, with the sides facing the outlet nozzles 3 and 4, are partly situated round the circumference of the round outlet nozzle parts 3 and 4. The side guard plates 151 are connected to the hopper supports 77 by means of brackets 160.

The hole 131 in the bottom 37, which is considerably wider than the diameter of the shaft, is round the shaft 7 sealed by means of a sealing ring 144 which is liberally movable in lateral direction in a recess 145 provided in the supporting part 91, the arrangement being as is shown in Figure 6. Owing to the fact that the hole 131 is wide by comparison with the shaft 7, this shaft together with the axle 132 attached eccentrically thereto can be fed through the hole 131 into the hopper.

The implement is especially designed for spreading material over a surface while it is travelling over this surface. For this purpose, the implement is capable of being connected to e.g. the lifting device of a tractor or similar vehicle by means of the coupling members 13 and 14. The drive shaft 12 can then be coupled to the power take-off shaft of the tractor through an intermediate shaft, so that during operation the spreading members 5 and 6 can be brought into rotation. During operation, the material is carried along in the hopper 2 and fed therefrom to the then rotating spreading members 5 and 6. During operation, the spreading members are made to rotate in mutually opposite directions of rotation 24 and 25. Here, the mutually adjacent sides of the two spreading members move in the normal operational direction of travel 49 of the implement.

The outlet openings 41 and 42 are symmetrically situated with respect to the centre plane 43. The size of the respective openings 41 and 42 has been chosen, and the shape of the same has been designed such that, over a relatively large angle round the rotary axis of the spreading members, the material is supplied to the spreading members and can be broadcast over a large angle by these. In this exemplary embodiment of the invention, the openings 67 and 68 are approximately 65°, and the opening 66 is approximately 45°. Preferably, the sum of these angles shall not be less than 80° and not be more than 140°. Partly owing to its shape, each of the spreading members spreads material over an angle of about 180° round its rotary axis. At the front of the spreading members, material is spread essentially transversely to the direction of travel 49, from the front of the right-hand spreading member to the right and from the front of the left-hand spreading member to the left. The two spreading members broadcast the material at the front side in opposite, divergent directions. At the rear of the spreading members, material is also spread essentially transversely to the direction of travel 49, but in opposite direction as compared with the front side. The two spreading members each throw the material over approximately the same distance on both sides of the plane 43, so that the distribution patterns of the two spreading members overlap virtually completely. The form and size of the outlet openings 41 and 42 have been chosen, and - partly in view of the form of the spreading member - the location of these openings is such that most types of fertilizer or other equivalent materials can be spread in a uniform distribution. The two spreading members spread the material to both sides of the centre plane 43 such that the material as a whole is evenly spreadable over a wide strip when the implement is moving forward over the field to be covered. With his, the uniform spread is achieved no matter whether more or less material is spread per unit of time or per unit of area, as the case may be.

The amount of material capable of flowing through the outlet openings 41 and 42 per unit of time is adjustable by closing or opening them further by means of the metering slides 86 and 87. The edges of the metering slides 86 and 87 operating in conjunction with the outlet openings in closing or opening them to any extent are zigzag-shaped. This goes with the formation of indentations 95, 96 and 97. These indentations have been chosen such that each of them operates in conjunction with one of the outlet opening parts 66, 67 and 68. The indentations 95, 96 and 97 have been chosen such that, even at a very small size of passage of each of the outlet openings 41 and 42, each of the parts 66, 67 and 68 forms an opening with a small-size passage. These small passage openings are then formed by the curved edge 52 of the opening 41 or 42 and the respective sides of the indentations 95, 96 and 97 or parts of the same, as the case may be. So, even when very small quantities per unit of time are allowed to flow from the hopper through the outlet openings, material will flow to the spreading members over a wide angle about the respective rotary axes of the spreading members. Accordingly, when small quantities of material per unit of time are to be spread, the material will still be capable of being spread over the full broadcasting angle of approximately 180° by means of the spreading members, whereby a desired distribution over the strip to be covered is feasible, when travelling in the direction 49. The curved edge 52 is a closing or sealing edge, over which the deepest parts of the indentations 95 to 97 are moved when the outlet is being closed completely. All this can also be achieved when the intermediate strips 69 and 70 are omitted.

The metering slides are easily operable by an adjusting mechanism, to which they are connected through the shown constructions comprising the sector-shaped supports 107, the connecting members 116 and the adjusting shaft 112. The metering slides can easily move forwards and backwards, because they are under pressure abutting the bottoms and sector-shaped supports. This motion is guided by the position of the respective finger-shaped supports 90 in the grooves 92 of the supporting parts 91. The spring 104 keeps the metering slides in a suitable manner against the underside of the bottom 37 for appropriate connection of the metering slides to the bottom of the outlet openings. Furthermore, the metering slides are appropriately supported by the curved sides 106 of the sector-shaped supports 107, which is maintained when the adjusting arm 118 is rotated and the curved sides 106 roll on the top surface of the respective metering slides 86 and 87. The desired motion of the metering slides can be controlled by an adjusting mechanism, which may be of any design and which is coupled to the adjusting shaft 112 through the adjusting arm 118. The finger-shaped support 90 fits loosely in the groove 92 such that any material landing between the bottom and the metering slide does not jam the metering slide. Material which has landed between the bottom and the metering slide can be eliminated by moving the metering slide forwards and backwards.

A suitable supply of material from the hopper nozzles 3 and 4 via the respective outlet openings 41 and 42 is ensured by the stirring member 130. Rotation of the spreading member causes this stirring member 130 to move slightly in the outlet nozzles through the eccentric motion of the eccentric shaft 102 about the centre line of the respective shafts 7 and 8 of the spreading members. In dependency of the resistance met with by the stirring member 130 in the material provided at the bottom of the hopper, the stirring member with the stirring arms attached to it will make a short motion governed by the eccentricity of the eccentric shaft 132 of the shaft 7. Should a more or less hollow space or cavity come into being in or just above the outlet nozzle of the hopper because the material does not sufficiently flow in the direction to the outlet opening, then the stirring member will rotate about the centre line of the eccentric shaft 132. This will keep the material sufficiently loose and prevent the material from clogging up the outlet nozzles or the hopper funnels, as the case may be.

Material delivered through the outlet openings 41 and 42 is, within the contour of the guard member 121, fed to the relevant spreading member. Here, the guard member 121 acts as a guide for the material, so that e.g. in the event of heavy oscillating motions of the implement, the material can still flow to the desired supply point of the spreading member. Furthermore, the guard member 121 has as its function to prevent that granules which come into contact with the spreading member, e.g. with the blades, will fly about in an undesired manner. The guard member keeps the material in the vicinity of the inner ends of the spreading blades in order to have it spread in the desired way via the spreading blades. A smooth reception of the material by the spreading member is favourably influenced by the lowered inner part of the spreading blade and the narrow top side 23 thereof. The guard member 121 connects to the top edges or sides 23 of the lowered inner parts of the spreading blades. This ensures a suitable flow of material from the outlet openings to the spreading members. The material can thus be appropriately scattered by the spreading blades so as to obtain a uniform spread of material. The front sides 152 of the side guard plates 151 and the rear ends of the guard flanges 146 and 147 are situated such that the two spreading members are capable of spreading the material advantageously over the large spreading angles of approximately 180°.

The spreading members 5 and 6 are further screened off by the guard plates 149 and 151 and the guard flanges 146 and 147. These guard parts prevent e.g. that air streams caused by wind or similar things adversely affect the broadcasting of material. Further, rebounding granules will not be spread in an undesired manner.

Below the adjusting shaft 112 and between the front of the guard plates 149 and 151 and the front of the sector-shaped supports 107 there is provided a guard member 158. This member 158 is suspended from the shaft 112 and extends downwards to beyond the front of the guard plates 149 and 151 and the sector-shaped supports 107. The guard member 158 extends virtually over the full length between the hopper supports 77. The guard member 158 is suspended from the adjusting shaft 112 by means of hook-shaped parts 159. The hook-shaped parts 159 are mounted freely rotatable about the adjusting shaft 112, so that the guard member 158 remains hanging downwards over the front of the guard plates 149 and 151 in case the adjusting shaft 112 is adjusted. The guard member 158 is preferably made of flexible material and its top side connects to the circumference of the adjusting shaft 112.

As mentioned hereinbefore, the metering slides can be operated by rotating the adjusting shaft 112 by means of the arm 118. Although the mentioned position of the metering slides can be obtained in numerous manners by setting and locking the arm 118, such as by means of sector-shaped plates mounted on the frame 1 and, along the edge, provided with a series of adjusting holes, in relation to which the arm 118 can be rotated and locked, in Figures 7 and 8 there is depicted an embodiment wherein one of the metering slides is adjustable, whereas the other one is kept in a fixed position. Accordingly, one metering slide can fully shut off the outlet opening, whereas the other one can be adjusted to a desired spread pattern; in this situation, a spread pattern towards only one side can be obtained, which is of importance to the so-called "fringe spreading".

In the embodiment represented in Figures 7 and 8, instead of the adjusting shaft 112, there are provided two concentrically extending adjusting shafts 160 and 161. A metering slide is adjustable by means of each of the adjusting shafts 160, 161 in the same manner as by means of the adjusting shaft 112 for the two metering slides as described hereinbefore. Again, the adjusting shaft 160 is supported in the bearings 113. In the same manner as the arm 118 is mounted on the adjusting shaft 112, an arm 162 is mounted on the adjusting shaft 160 and an arm 163 is mounted on the adjusting shaft 161. The arm 163 is longer than the arm 162 and is spring-loaded, viz. in the sense that the arm 163 is pushed towards or against the arm 162. Due to the fact that the arm 163 is provided with a protruding pin 164 which falls into a hole in the arm 162, the two arms 162, 163 are mutually fixed and the two metering slides are moved by actuating the arms. During rotation, the arms 162 and 163 can be moved along sector-shaped plates 165 and 166 provided with holes and rigidly attached to the frame 1, and then be fixed relative to these plates 165, 166 in a desired position. The two arms 162 and 163 can be uncoupled by means of a pin 167. In the embodiment of the invention shown here, this is only practicable in the lowest position of the arms 162, 163; in this lowest position, the two metering openings are shut off. The lowest hole in the plate 165 from where the pin 167 can be fed through the two plates 165 and 166 and the arm 163 has an additional recess for protrusions 168, 169 on the pin 167. In a particular position, the pin 167 can be fed through the plate 165 and subsequently through the arm 163 until the first protrusion 168 strikes the arm 163, whereupon, as the pin 167 is pushed further, the arm 163 is pushed in the direction of the plate 166 and is released from the arm 162. Finally, when the pin has been fed through the plate 166, this can be rotated and the pin is fixed by the second protrusion 169 which, bearing against the plate 165, prevents the pin 167 from being pushed out again. The arm 163 is now fixed in relation to the plates 165, 166, while the arm 162 is freely rotatable, so that herewith the respective corresponding metering slide can be actuated through the adjusting shaft 160.

For the purpose of putting the implement according to the invention into an oblique position, which is of importance to the so-called "fringe spreading", there is pivotably mounted a tilting plate 171 between one of the lower lifting arms 170 of the lifting device of the tractor and one of the main frame beams 11 (Figure 7). This tilting plate is connected pivotably about a pin 172 with the main frame beam 11 and has three holes, where, in the position as shown in Figure 7, a pin 173 and a pin 174 are inserted in the two upper holes, and that in such a manner that the position of the plate 171 is fixed in relation to the main frame beam 11. When the top pin 173 is removed, the tilting plate 171 rotates and the main frame beam 11 comes a little down, namely to the point where the pin 174 blocks any further downward motion. By subsequent insertion of the pin 173 into the lowest hole, the position of the tilting plate 171, tipped indeed, is again fixed in relation to the main frame beam 11. Due to the fact that such a mechanism is only provided on one side of the implement, the implement is suspended in an oblique position behind the vehicle carrying same. It will be obvious that, instead of making use of three holes in the tilting plate 171 and corresponding pins 173, 174, the more expensive solution of making use of an actuating cylinder 175 can be chosen, which actuating cylinder should then be placed between the tilting plate 171 and a support 176 attached to the main frame beam 11. In Figure 7, this cylinder is drawn in dash lines.

## Claims

1. An implement for spreading granular and/or pulverulent material, especially for spreading fertilizers, which implement comprises both a hopper (2) provided with at least one outlet opening (41, 42) and at least one spreading member (5, 6), where the outlet opening (41, 42) is capable of being further closed or opened at choice by a metering slide (86, 87) which is capable of moving forward and backward along a hopper wall (37, 38) comprising the outlet opening (41, 42), under pressure abuts against the wall (37, 38) and extends to beyond the wall (37, 38) and of being put into one of at least two positions at choice, **characterized in that** the metering slide (86, 87) outside the wall (37, 38), under pressure abuts against the curved side of a sector-shaped support (107), and is capable of rolling on the curved side (106) as it moves along the outlet opening (41, 42) during adjustment.

2. An implement according to claim 1, **characterized in that** the metering slide (86, 87) is connected to the sector-shaped support (107) by means of a connecting member (116), where the sector-shaped support (107) mounted on an adjusting shaft (112) is capable of pivoting for moving the metering slide (86, 87).

3. An implement according to claim 2, **characterized in that** the adjusting shaft (112) is coupled to an adjusting mechanism, by means of which the discharge of the desired amount of material per unit of time from the hopper (2) to the spreading device (5, 6) is controllable by setting at choice the size of passage of the outlet opening (41, 42) through opening or closing this outlet opening (41, 42) to a larger or smaller extent by means of the metering slide (86, 87).

4. An implement according to any one of the preceding claims, **characterized in that** the pressure under which the metering slide (86, 87) abuts against the wall (37, 38) is exerted by a member (104) provided between the wall (37, 38) and the sector-shaped support (107) and connected with the metering slide (86, 87).

5. An implement according to claim 4, **characterized in that** the member (104) is an extension spring, one end of which is connected with the metering slide (86, 87) and the other end is connected with any other part of the implement.

6. An implement according to any one of the preceding claims, **characterized in that** the sector-shaped support (107) is U-shaped, the legs of the U being two sector-shaped supporting plates (108, 109) whose curved sides (106) each abut against the metering slide (86, 87).

7. An implement according to claim 2 or any one of claims 3 to 6, as far as dependent on claim 2, **characterized in that** the connecting member (116) between the metering slide (86, 87) and the sector-shaped support (107) is hinge-connected with the sector-shaped support (107) and hinge-connected with the metering slide (86, 87).

8. An implement according to claim 7, **characterized in that** the connecting member (116), as seen in a plan view, is a H-shaped plate, of which the respective ends of the H-legs oriented in the same direction are coupled with the sector-shaped support (107) or the metering slide (86, 87), where the member (104) keeping the metering slide (86, 87) under pressure abutting the wall (37, 38) is coupled with the hinge shaft (103), through which the connecting member (116) is connected with the metering slide (86, 87) and where the connecting member (116) connects to the hinge shaft (117) extending between two legs of the H-shaped connecting member (116) in the same direction.

9. An implement according to any one of the preceding claims, **characterized in that** the wall part (37, 38) comprising the outlet opening (41, 42) constitutes a bottom plate of the hopper (2).

10. An implement according to claim 9, **characterized in that** the bottom plate (37, 38) is a flat plate extending at least essentially perpendicularly to the axis of the spreading member (5, 6).

11. An implement according to claim 9 or 10, **characterized in that** the wall (37, 38) constitutes a bottom plate of an outlet nozzle (3, 4) of the hopper (2).

12. An implement according to any one of the preceding claims, **characterized in that** the metering slide (86, 87) is provided with a protrusion (90) which constitutes a guide member located in a groove (92) formed between the wall (37, 38) and a supporting part (91) provided thereon.

13. An implement according to claim 12, **characterized in that** the supporting part (91) is rectangular and that at least one of the sides is provided with a groove (92) wherein the protrusion (90) of the metering slide (86, 87) is slidably mounted.

14. An implement according to claim 12 or 13, **characterized in that** a side of the protrusion (90), as seen in a plan view, at least essentially coincides with a side of the outlet opening (41, 42) and its extension.

15. An implement according to any one of the preceding claims, **characterized in that** the implement comprises at least two spreading members (5, 6), each corresponding with an outlet nozzle (3, 4) of the hopper (2) comprising at least one outlet opening (41, 42), where the metering slides (86, 87), each of which operates in conjunction with the outlet openings (41, 42) in the respective outlet nozzles (3, 4), abut against the respective walls (37, 38) and against the curved side (106) of a sector-shaped support (107), where the sector-shaped supports (107) of the two metering slides (86, 87) are coupled to one and the same adjusting shaft (112) and are simultaneously adjustable by this adjusting shaft (112).

16. An implement according to claim 15, **characterized in that** the two metering slides (86, 87) and the corresponding sector-shaped supports (107) and outlet openings (41, 42) are shaped and arranged symmetrically in relation to a plane extending in the normal direction of travel of the implement and being situated centrally between the two outlet nozzles (3, 4) or the two outlet openings (41, 42).

17. An implement according to claim 15 or 16, **characterized in that** the supporting parts (91) provided with a groove (92) for guiding the protrusions (90) of the metering slides (86, 87) are in line with each other and are symmetrically shaped in relation to the centre plane at half the distance between the two outlet openings (41, 42).

18. An implement according to claim 15, 16 or 17, **characterized in that** the two spreading members (5, 6) and the corresponding outlet openings (41, 42) are shaped and arranged, and that the spreading members (5, 6) are made to rotate such that the two spreading members (5, 6) each broadcast material over the same strip when the implement during operation travels over the surface area to be covered.

19. An implement according to any one of the preceding claims, **characterized in that** the side of the metering slide (86, 87) which operates in conjunction with the outlet opening (41, 42) for the purpose of closing or opening the latter by a certain amount is provided with recesses or indentations (95, 96, 97) which form, at least after partial closure of the outlet opening (41, 42), in combination with parts of the sides of the outlet opening (41, 42), two or more small passages (66, 67, 68) situated side by side.

20. An implement according to claim 19, **characterized in that** the indentations (95, 96, 97), as viewed at right angles to the metering slide (86, 87), are V-shaped, where the two divergent sides of the V-shape facing the closing side of the outlet opening (41, 42) are disposed such that, when the outlet is being closed, the deepest located portion of each indentation moves past the closing side of the outlet opening (41, 42).

21. An implement according to claim 19 or 20, **characterized in that** the indentations (95, 96, 97) located side by side are different in size, as viewed in a direction perpendicular to the direction of travel of the metering slide (86, 87).

22. An implement according to claim 21, **characterized in that** the metering slide (86, 87) comprises three indentations (95, 96, 97), the central one (96) of which has a smaller width than the two adjoining indentations (95, 97) which have an approximately equal width.

23. An implement according to claim 22, **characterized in that** the central indentation (96) has a width which is approximately half that of the adjoining indentations (95, 97).

24. An implement according to any one of claims 19 to 23, **characterized in that** the indentations (95, 96, 97) and the outlet opening (41, 42) are located on a curve round the rotary axis of the spreading member (5, 6), with the curve's hollow side facing the rotary axis.

25. An implement according to claim 24, **characterized in that**, measured in a radial direction, the centre of the outlet opening (41, 42) is approximately centrically located with respect to the rotary axis of the spreading member (5, 6).

26. An implement according to any one of claims 19 to 25, **characterized in that** the outlet opening (41, 42) in an outlet nozzle (3, 4) of the hopper (2) extends round the rotary axis of the spreading member (5, 6) over an angle greater than approximately 80° and smaller than approximately 140°.

27. An implement according to claim 26, **characterized in that** the outlet opening (41, 42) extends from one side of a plane comprising the rotary axis of the spreading member (5, 6) and extending in the normal direction of travel of the implement in operation further than it extends from the other side of this plane.

28. An implement according to claim 27, as far as dependent on claim 15, **characterized in that** the outlet openings (41, 42) of the two outlet nozzles (3, 4) extend from the sides, turned away from each other, of the respective planes comprising the rotary axes of the spreading members (5, 6) further than they extend from the side of this plane facing each other.

29. An implement according to any one of the preceding claims, **characterized in that** the spreading member (5, 6) comprises at least one spreading blade (18), whose inner end part which faces the axis of the spreading member (5, 6) and during operation passes by an outlet opening (41, 42) is lower than the outer part of the spreading blade (18) turned away from the rotary axis.

30. An implement according to claim 29, **characterized in that** the outer part of the spreading blade (18) has a top side extending at least virtually perpendicularly to the rotary axis of the spreading member (5, 6) and is provided with a protruding flange (19) extending in the same direction as the normal direction of rotation by the spreading member (5, 6).

31. An implement according to claim 29 or 30, **characterized in that** the top side of the lowered inner part of the spreading blade (18) runs obliquely downwards in the direction of the rotary axis of the spreading member (5, 6).

32. An implement according to any one of claims 29 to 31, **characterized in that** the spreading member (5, 6) comprises a conical plate extending upwards, as viewed from the rotary axis of the spreading member (5, 6), and that on this plate there is provided a plurality of spreading blades (18) , whose inner ends connect with a raised central part (76) of a spreading member (5, 6).

33. An implement according to any one of claims 29 to 32, **characterized in that** the lowered inner part of a spreading blade (18), as measured in a radial direction, is shorter than the outer part of the spreading blade (18).

34. An implement according to any one of the preceding claims, **characterized in that** in between the wall part (37, 38) in which the outlet opening (41, 42) is provided and the spreading member (5, 6) there is disposed a guard flange (121) which extends at least approximately round a part of the outlet opening (41, 42), as viewed from above.

35. An implement according to claim 34, **characterized in that** the guard flange (121) has its top side at least approximately connected to that side of the outlet opening (41, 42) which is averted from the rotary axis of the spreading member (5, 6) or the centre of the outlet nozzle (3, 4).

36. An implement according to claim 35, **characterized in that** the guard flange (121) in downward direction diverges from the rotary axis of the spreading member (5, 6) and has its lower edge situated at a short distance above the top side of the lowered inner part of a spreading blade (18).

37. An implement according to any one of claims 34 to 36, **characterized in that** the guard flange (121) is provided with a straight part (124) situated on that side of the outlet opening (41, 42) from which a spreading blade (18) is moving past the outlet opening (41, 42), with this straight part (124) extending at least virtually parallel to a plane which comprises the rotary axis of the spreading member (5, 6) and extends in the normal direction of travel of the implement.

38. An implement according to any one of claims 34 to 37, **characterized in that** the guard flange (121) has an at least essentially radial part (125) which is on that side of the outlet opening (41, 42) which is the last to be passed by a spreading blade (18) as it moves under the outlet opening (41,42).

39. An implement according to any one of the preceding claims, **characterized in that**, near the outlet opening (41, 42) in the outlet nozzle (3, 4), there is provided a stirring member (130) which is rotatably mounted on an axle (132) connected eccentrically to the shaft (7) of the spreading member (5, 6), where the stirring member (130) comprises stirring means (137) extending essentially vertically in the outlet nozzle (3, 4) of the hopper (2).

40. An implement according to claim 39, **characterized in that** the stirring means (137) are triangular in section and are connected, by means of carrying arms (136), to a carrying member (133) rotatably mounted on the axle (132).

41. An implement according to claim 39 or 40, **characterized in that**, centrally between two carrying arms (136), there is provided a stirring arm (138) directed obliquely downwards.

42. An implement according to any one of claims 39 to 41, **characterized in that** the stirring member (130) comprises a stirring arm (139) extending at least essentially horizontally, at the end of which there is provided a part (140) extending vertically along the wall of the outlet nozzle (3, 4).

43. An implement according to any one of claims 39 to 42, **characterized in that** the shaft (7) of the spreading member (5, 6) extends through the hopper bottom and, in the outlet nozzle (3, 4), is connected with the stirring member (130), where the shaft (7) is located in a hole (131) in the bottom of the outlet nozzle (3, 4), which hole (131) is sealed by means of a ring (144) which fits round the shaft (7) of the spreading member (5, 6) and rests in a groove (92) provided in the supporting part (91) for the protrusion (90) of the metering slide (86, 87).

44. An implement according to any one of the preceding claims, **characterized in that** round at least a part of the spreading member (5, 6) there is provided a guide flange (146, 147), and on the top side of this flange (146, 147) there is situated a guard plate (149) extending at least over a portion of the top surface of the spreading member (5, 6).

45. An implement according to any one of the preceding claims, as far as dependent on claim 15, **characterized in that** round the mutually facing sides of the spreading members (5, 6) there are provided guide flanges (146, 147), on the topside whereof there is provided a guard plate (149) which extends over the parts of the spreading members (5, 6) facing each other and extends between the two outlet nozzles (3, 4) under which the two spreading members (5, 6) are located, and that, on the sides of the outlet nozzles (3, 4) turned away from each other, there are provided guard plates (149) which connect to at least a part of the circumference of the outlet nozzles (3, 4) and are in a higher position than the underside of the outlet nozzles (3, 4).

46. An implement according to claim 44 or 45, **characterized in that** the side guard plates (146, 147) on the front of the spreading members (5, 6) are provided with flanges (152) which are directed downwards and which extend to approximately the level of the underside of the spreading member (5, 6).

47. An implement according to any one of the preceding claims, **characterized in that** a flexible guard member (158) directed downwards is placed on the adjusting shaft (112) for the sector-shaped supports (107), where this guard member (158) extends from the adjusting shaft (112) to beyond the front of the guard plates (146, 147) and/or the sector-shaped supports (107).

48. An implement according to any one of the preceding claims, **characterized in that** there are provided adjusting means (160, 161) for moving the metering slides (86, 87), where the adjusting means (160) for a metering slide ( 86, 87) are capable of being uncoupled from the adjusting means (161) for an other metering slide (186, 187).

49. An implement according to claim 48, **characterized in that** there is provided an uncoupling mechanism (162 - 169) which, on the condition that the outlet openings (41, 42) for material from the hopper (2) are shut off, is to uncouple the adjusting means for a metering slide from those for the other slide and to set them to a desired dosage.

## Patentansprüche

1. Vorrichtung zum Streuen von körnigem und/oder pulverigem Gut, insbesondere zum Streuen von Kunstdünger, wobei die Vorrichtung sowohl einen mit mindestens einer Auslaßöffnung (41, 42) versehenen Vorratsbehälter (2) als auch mindestens ein Streuglied (5, 6) umfaßt, wobei die Auslaßöffnung (41, 42) durch einen Dosierschieber (86, 87) wahlweise weiter geschlossen oder geöffnet werden kann, der entlang einer die Auslaßöffnung (41, 42) enthaltenden Behälterwand (37, 38) nach vorn und hinten bewegbar ist, unter Druck an der Wand (37, 38) anliegt und sich über die Wand (37, 38) hinauserstreckt, und der wahlweise in eine von mindestens zwei Positionen einstellbar ist,
**dadurch gekennzeichnet, daß** der Dosierschieber (86, 87) außerhalb der Wand (37, 38) unter Druck an der gekrümmten Seite einer sektorförmigen Stütze (107) anliegt und an der gekrümmten Seite (106) abrollen kann, wenn er sich während des Einstellens entlang der Auslaßöffnung (41, 42) bewegt.

2. Vorrichtung nach Anspruch 1,
**dadurch gekennzeichnet, daß** der Dosierschieber (86, 87) mit der sektorförmigen Stütze (107) durch ein Verbindungsglied (116) verbunden ist, wobei die an einer Stellwelle (112) angebrachte sektorförmige Stütze (107) zum Bewegen des Dosierschiebers (86, 87) verschwenkt werden kann.

3. Vorrichtung nach Anspruch 2,
**dadurch gekennzeichnet, daß** die Stellwelle (112) mit einem Stellmechanismus verbunden ist, mittels dessen die Zufuhr der gewünschten Gutmenge pro Zeiteinheit aus dem Vorratsbehälter (2) zu dem Streuglied (5, 6) dadurch steuerbar ist, daß wahlweise die Größe der Durchtrittsöffnung der Auslaßöffnung (41, 42) dadurch eingestellt wird, daß diese Auslaßöffnung (41, 42) mittels des Dosierschiebers (86, 87) mehr oder weniger geöffnet oder geschlossen wird.

4. Vorrichtung nach einem der vorhergehenden Ansprüche,
**dadurch gekennzeichnet, daß** der Druck, mit dem der Dosierschieber (86, 87) an der Wand (37, 38) anliegt, von einem Glied (104) ausgeübt wird, das zwischen der Wand (37, 38) und der sektorförmigen Stütze (107) angeordnet und mit dem Dosierschieber (86, 87) verbunden ist.

5. Vorrichtung nach Anspruch 4,
**dadurch gekennzeichnet, daß** das Glied (104) durch eine Zugfeder gebildet ist, deren eines Ende mit dem Dosierschieber (86, 87) und deren anderes Ende mit einem beliebigen anderen Teil der Vorrichtung verbunden ist.

6. Vorrichtung nach einem der vorhergehenden Ansprüche,
**dadurch gekennzeichnet, daß** die sektorförmige Stütze (107) U-förmig ausgebildet ist, wobei die Schenkel des U durch zwei sektorförmige Stützplatten (108, 109) gebildet sind, deren gekrümmte Seiten (106) jeweils an dem Dosierschieber (86, 87) anliegen.

7. Vorrichtung nach Anspruch 2 oder einem der Ansprüche 3 bis 6, soweit auf Anspruch 2 rückbezogen,
**dadurch gekennzeichnet, daß** das Verbindungsglied (116) zwischen dem Dosierschieber (86, 87) und der sektorförmigen Stütze (107) mit der sektorförmigen Stütze (107) und mit dem Dosierschieber (86, 87) gelenkig verbunden ist.

8. Vorrichtung nach Anspruch 7,
**dadurch gekennzeichnet, daß** das Verbindungsglied (116) in Draufsicht durch eine H-förmige Platte gebildet ist, wobei die jeweiligen Enden der in derselben Richtung ausgerichteten Schenkel des H mit der sektorförmigen Stütze (107) oder dem Dosierschieber (86, 87) verbunden sind, wobei das Glied (104), das den Dosierschieber (86, 87) unter Druck gegen die Wand (37, 38) gedrückt hält, mit der Gelenkachse (103) verbunden ist, durch die das Verbindungsglied (116) mit dem Dosierschieber (86, 87) verbunden ist, und wobei das Verbindungsglied (116) mit der Gelenkachse (117) verbunden ist, die sich zwischen zwei in derselben Richtung ausgerichteten Schenkeln des H-förmigen Verbindungsgliedes (116) erstreckt.

9. Vorrichtung nach einem der vorhergehenden Ansprüche,
**dadurch gekennzeichnet, daß** der die Auslaßöffnung (41, 42) enthaltende Wandungsteil (37, 38) eine Bodenplatte des Vorratsbehälters (2) bildet.

10. Vorrichtung nach Anspruch 9,
**dadurch gekennzeichnet, daß** die Bodenplatte (37, 38) eine flache Platte ist, die sich zumindest im wesentlichen senkrecht zur Achse des Streugliedes (5, 6) erstreckt.

11. Vorrichtung nach Anspruch 9 oder 10,
**dadurch gekennzeichnet, daß** die Wand (37, 38) eine Bodenplatte eines Auslaßtrichters (3, 4) des Vorratsbehälters (2) bildet.

12. Vorrichtung nach einem der vorhergehenden Ansprüche,
**dadurch gekennzeichnet, daß** der Dosierschieber (86, 87) mit einem Vorsprung (90) versehen ist, der ein Führungsglied bildet, das in einer Nut (92) angeordnet ist, die zwischen der Wand (37, 38) und einem darauf angeordneten Stützteil (91) ausgebildet ist.

13. Vorrichtung nach Anspruch 12,
**dadurch gekennzeichnet, daß** der Stützteil (91) rechteckig ausgebildet ist, und daß mindestens eine der Seiten mit einer Nut (92) versehen ist, in der der Vorsprung (90) des Dosierschiebers (86, 87) verschiebbar angeordnet ist.

14. Vorrichtung nach Anspruch 12 oder 13,
**dadurch gekennzeichnet, daß** eine Seite des Vorsprunges (90) in Draufsicht zumindest im wesentlichen mit einer Seite der Auslaßöffnung(41, 42) und ihrer Verlängerung zusammenfällt.

15. Vorrichtung nach einem der vorhergehenden Ansprüche,
**dadurch gekennzeichnet, daß** die Vorrichtung mindestens zwei Streuglieder (5, 6) umfaßt, die jeweils einem Auslaßtrichter (3, 4) des Vorratsbehälters (2) entsprechen, der mindestens eine Auslaßöffnung (41, 42) umfaßt, wobei die Dosierschieber (86, 87), die jeweils mit den Auslaßöffnungen (41, 42) in den jeweiligen Auslaßtrichtern (3, 4) zusammenwirken, an den jeweiligen Wänden (37, 38) und an der gekrümmten Seite (106) einer sektorförmigen Stütze (107) anliegen, wobei die sektorförmigen Stützen (107) der beiden Dosierschieber (86, 87) mit ein und derselben Stellwelle (112) verbunden und von dieser Stellwelle (112) gemeinsam einstellbar sind.

16. Vorrichtung nach Anspruch 15,
**dadurch gekennzeichnet, daß** die beiden Dosierschieber (86, 87) und die entsprechenden sektorförmigen Stützen (107) und Auslaßöffnungen (41, 42) relativ zu einer Ebene symmetrisch ausgebildet und angeordnet sind, die sich in Arbeitsrichtung der Vorrichtung erstreckt und mittig zwischen den beiden Auslaßtrichtern (3, 4) oder den beiden Auslaßöffnungen (41, 42) angeordnet ist.

17. Vorrichtung nach Anspruch 15 oder 16,
**dadurch gekennzeichnet, daß** die Stützteile (91), die mit einer Nut (92) zur Führung der Vorsprünge (90) der Dosierschieber (86, 87) versehen sind, fluchtend zueinander ausgerichtet und, bezogen auf die mittig zwischen den beiden Auslaßöffnungen (41, 42) stehende Mittelebene, symmetrisch ausgebildet sind.

18. Vorrichtung nach Anspruch 15, 16 oder 17,
**dadurch gekennzeichnet, daß** die beiden Streuglieder (5, 6) und die entsprechenden Auslaßöffnungen (41, 42) derart geformt und angeordnet sind, und daß die Streuglieder (5, 6) derart in Drehung versetzt werden, daß die beiden Streuglieder (5, 6) jeweils Gut über denselben Bodenstreifen ausstreuen, wenn die Vorrichtung im Betrieb über die zu bestreuende Fläche fährt.

19. Vorrichtung nach einem der vorhergehenden Ansprüche,
**dadurch gekennzeichnet, daß** die Seite des Dosierschiebers (86, 87), der mit der Auslaßöffnung (41, 42) zusammenwirkt, um diese um ein bestimmtes Maß zu schließen oder zu öffnen, mit Ausnehmungen oder Aussparungen (95, 96, 97) versehen ist, die zumindest nach einer teilweisen Schließung der Auslaßöffnung (41, 42) in Kombination mit Teilen der Seiten der Auslaßöffnung (41, 42) zwei oder mehrere kleine nebeneinanderliegende Durchtrittsöffnungen (66, 67, 68) bilden.

20. Vorrichtung nach Anspruch 19,
**dadurch gekennzeichnet, daß** die Aussparungen (95, 96, 97) rechtwinklig zum Dosierschieber (86, 87) betrachtet V-förmig sind, wobei die beiden divergierenden Seiten der V-Form, die der Schließseite der Auslaßöffnung (41, 42) gegenüberliegen, derart angeordnet sind, daß bei geschlossenem Auslaß der am tiefsten liegende Teil jeder Aussparung sich hinter der Schließseite der Auslaßöffnung (41, 42) bewegt.

21. Vorrichtung nach Anspruch 19 oder 20,
**dadurch gekennzeichnet, daß** die nebeneinanderliegenden Aussparungen (95, 96, 97) senkrecht zur Bewegungsrichtung des Dosierschiebers (86, 87) betrachtet unterschiedlich groß sind.

22. Vorrichtung nach Anspruch 21,
**dadurch gekennzeichnet, daß** der Dosierschieber (86, 87) drei Aussparungen (95, 96, 97) umfaßt, von denen die mittlere Aussparung (96) eine geringere Breite aufweist als die beiden angrenzenden Aussparungen (95, 97), die etwa gleich breit sind.

23. Vorrichtung nach Anspruch 22,
**dadurch gekennzeichnet, daß** die mittlere Aussparung (96) eine Breite aufweist, die etwa die Hälfte der Breite der angrenzenden Aussparungen (95, 97) beträgt.

24. Vorrichtung nach einem der Ansprüche 19 bis 23,
**dadurch gekennzeichnet, daß** die Aussparungen (95, 96, 97) und die Auslaßöffnung (41, 42) auf einem Bogen um die Drehachse des Streugliedes (5, 6) liegen, wobei die offene Seite des Bogens der Drehachse zugewandt ist.

25. Vorrichtung nach Anspruch 24,
**dadurch gekennzeichnet, daß** in radialer Richtung gemessen die Mitte der Auslaßöffnung (41, 42) etwa konzentrisch zur Drehachse des Streugliedes (5, 6) angeordnet ist.

26. Vorrichtung nach einem der Ansprüche 19 bis 25,
**dadurch gekennzeichnet, daß** sich die Auslaßöffnung (41, 42) in einem Auslaßtrichter (3, 4) des Vorratsbehälters (2) um die Drehachse des Streugliedes (5, 6) über einen Winkel erstreckt, der größer als etwa 80° und kleiner als etwa 140° ist.

27. Vorrichtung nach Anspruch 26,
**dadurch gekennzeichnet, daß** sich die Auslaßöffnung (41, 42) auf der einen Seite einer Ebene, die die Drehachse des Streugliedes (5, 6) enthält und sich im Betrieb in Arbeitsrichtung der Vorrichtung erstreckt, weiter als auf der anderen Seite dieser Ebene erstreckt.

28. Vorrichtung nach Anspruch 27, soweit auf Anspruch 15 rückbezogen,
**dadurch gekennzeichnet, daß** sich die Auslaßöffnungen (41, 42) der beiden Auslaßtrichter (3, 4) auf den voneinander abgewandten Seiten der jeweiligen Ebenen, die die Drehachsen der Streuglieder (5, 6) enthalten, weiter erstrecken als auf den einander zugewandten Seiten dieser Ebene.

29. Vorrichtung nach einem der vorhergehenden Ansprüche,
**dadurch gekennzeichnet, daß** das Streuglied (5, 6) mindestens eine Wurfschaufel (18) umfaßt, deren innerer Endteil, der der Achse des Streugliedes (5, 6) zugewandt ist und sich im Betrieb an einer Auslaßöffnung (41, 42) entlangbewegt, niedriger ist als der äußere Teil der Wurfschaufel (18), der von der Drehachse abgewandt ist.

30. Vorrichtung nach Anspruch 29,
**dadurch gekennzeichnet, daß** der äußere Teil der Wurfschaufel (18) eine Oberseite aufweist, die sich zumindest im wesentlichen senkrecht zur Drehachse des Streugliedes (5, 6) erstreckt, und mit einem vorspringenden Flansch (19) versehen ist, der sich in eine der Drehrichtung des Streugliedes (5, 6) entsprechende Richtung erstreckt.

31. Vorrichtung nach Anspruch 29 oder 30,
**dadurch gekennzeichnet, daß** sich die Oberseite des niedriger ausgebildeten inneren Teiles der Wurfschaufel (18) schräg nach unten in Richtung auf die Drehachse des Streugliedes (5, 6) erstreckt.

32. Vorrichtung nach einem der Ansprüche 29 bis 31,
**dadurch gekennzeichnet, daß** das Streuglied (5, 6) eine konische Platte umfaßt, die sich von der Drehachse des Streugliedes (5, 6) aus gesehen nach oben erstreckt, und daß an dieser Platte mehrere Wurfschaufeln (18) angeordnet sind, deren innere Enden mit einem erhöhten mittleren Teil (76) eines Streugliedes (5, 6) verbunden sind.

33. Vorrichtung nach einem der Ansprüche 29 bis 32,
**dadurch gekennzeichnet, daß** der niedriger ausgebildete innere Teil einer Wurfschaufel (18) in radialer Richtung gemessen kürzer ist als der äußere Teil der Wurfschaufel (18).

34. Vorrichtung nach einem der vorhergehenden Ansprüche,
**dadurch gekennzeichnet, daß** zwischen dem Wandungsteil (37, 38), in dem die Auslaßöffnung (41, 42) ausgebildet ist, und dem Streuglied (5, 6) ein Schutzflansch (121) angeordnet ist, der sich von oben betrachtet mindestens annähernd um einen Teil der Auslaßöffnung (41, 42) herum erstreckt.

35. Vorrichtung nach Anspruch 34,
**dadurch gekennzeichnet, daß** die Oberseite des Schutzflansches (121) mindestens annähernd mit der Seite der Auslaßöffnung (41, 42) verbunden ist, die von der Drehachse des Streugliedes (5, 6) oder von der Mitte des Auslaßtrichters (3, 4) abgewandt ist.

36. Vorrichtung nach Anspruch 35,
**dadurch gekennzeichnet, daß** sich der Schutzflansch (121) in Richtung nach unten von der Drehachse des Streugliedes (5, 6) entfernt und mit seiner Unterkante in geringer Höhe über der Oberseite des niedriger ausgebildeten inneren Teiles einer Wurfschaufel (18) angeordnet ist.

37. Vorrichtung nach einem der Ansprüche 34 bis 36,
**dadurch gekennzeichnet, daß** der Schutzflansch (121) mit einem geraden Teil (124) versehen ist, der auf der Seite der Auslaßöffnung (41, 42) liegt, von der aus sich eine Wurfschaufel (18) an der Auslaßöffnung (41, 42) vorbeibewegt, wobei sich dieser gerade Teil (124) zumindest im wesentlichen parallel zu einer Ebene erstreckt, die die Drehachse des Streugliedes (5, 6) enthält und sich in Arbeitsrichtung der Vorrichtung erstreckt.

38. Vorrichtung nach einem der Ansprüche 34 bis 37,
**dadurch gekennzeichnet, daß** der Schutzflansch (121) einen zumindest im wesentlichen radialen Teil (125) aufweist, der auf der Seite der Auslaßöffnung (41, 42) angeordnet ist, die von einer Wurfschaufel (18) während ihrer Bewegung unter der Auslaßöffnung (41, 42) vorbei als letzte zu passieren ist.

39. Vorrichtung nach einem der vorhergehenden Ansprüche,
**dadurch gekennzeichnet, daß** nahe der Auslaßöffnung (41, 42) im Auslaßtrichter (3, 4) ein Rührglied (130) angeordnet ist, das drehbar an einer Achse (132) angebracht ist, die mit der Achse (7) des Streugliedes (5, 6) exzentrisch verbunden ist, wobei das Rührglied (130) Rührvorrichtungen (137) umfaßt, die sich in dem Auslaßtrichter (3, 4) des Vorratsbehälters (2) im wesentlichen in vertikaler Richtung erstrecken.

40. Vorrichtung nach Anspruch 39,
**dadurch gekennzeichnet, daß** die Rührvorrichtungen (137) ein dreieckiges Profil aufweisen und mittels Tragarmen (136) mit einem Tragglied (133) verbunden sind, das an der Achse (132) drehbar angebracht ist.

41. Vorrichtung nach Anspruch 39 oder 40,
**dadurch gekennzeichnet, daß** mittig zwischen zwei Tragarmen (136) ein schräg nach unten gerichteter Rührarm (138) angeordnet ist.

42. Vorrichtung nach einem der Ansprüche 39 bis 41,
**dadurch gekennzeichnet, daß** das Rührglied (130) einen Rührarm (139) umfaßt, der sich zumindest im wesentlichen in horizontaler Richtung erstreckt und an seinem Ende einen Teil (140) aufweist, der sich in vertikaler Richtung entlang der Wand des Auslaßtrichters (3, 4) erstreckt.

43. Vorrichtung nach einem der Ansprüche 39 bis 42,
**dadurch gekennzeichnet, daß** sich die Achse (7) des Streugliedes (5, 6) durch den Boden des Vorratsbehälters erstreckt und in dem Auslaßtrichter (3, 4) mit dem Rührglied (130) verbunden ist, wobei die Achse (7) in einer Öffnung (131) im Boden des Auslaßtrichters (3, 4) angeordnet ist, wobei die Öffnung (131) durch einen Ring (144) abgedichtet ist, der die Achse (7) des Streugliedes (5, 6) umschließt und in einer Nut (92) angeordnet ist, die in dem Stützteil (91) für den Vorsprung (90) des Dosierschiebers (86, 87) ausgebildet ist.

44. Vorrichtung nach einem der vorhergehenden Ansprüche,
**dadurch gekennzeichnet, daß** das Streuglied (5, 6) zumindest teilweise von einem Führungsflansch (146, 147) umgeben ist und an der Oberseite dieses Flansches (146, 147) eine Schutzplatte (149) angeordnet ist, die sich zumindest über einen Teil der Oberfläche des Streugliedes (5, 6) erstreckt.

45. Vorrichtung nach einem der vorhergehenden Ansprüche, soweit auf Anspruch 15 rückbezogen,
**dadurch gekennzeichnet, daß** die einander gegenüberliegenden Seiten der Streuglieder (5, 6) von Führungsflanschen (146, 147) umgeben sind, an deren Oberseite eine Schutzplatte (149) angeordnet ist, die sich über die einander gegenüberliegenden Teile der Streuglieder (5, 6) erstreckt und sich zwischen den beiden Auslaßtrichtern (3, 4) erstreckt, unter denen die beiden Streuglieder (5, 6) angeordnet sind, und daß an den voneinander abgewandten Seiten der Auslaßtrichter (3, 4) Schutzplatten (149) angeordnet sind, die zumindest mit einem Teil des Umfanges der Auslaßtrichter (3, 4) verbunden und in einer höheren Position als die Unterseite der Auslaßtrichter (3, 4) angeordnet sind.

46. Vorrichtung nach Anspruch 44 oder 45,
**dadurch gekennzeichnet, daß** die Seitenschutzplatten (146, 147) an der Vorderseite der Streuglieder (5, 6) mit Flanschen (152) versehen sind, die nach unten gerichtet sind und sich etwa bis zur Höhe der Unterseite des Streugliedes (5, 6) erstrecken.

47. Vorrichtung nach einem der vorhergehenden Ansprüche,
**dadurch gekennzeichnet, daß** ein nach unten gerichtetes elastisches Schutzglied (158) an der Stellwelle (112) für die sektorförmigen Stützen (107) angeordnet ist, wobei sich dieses Schutzglied (158) von der Stellwelle (112) bis über die Vorderseite der Schutzplatten (146, 147) und/oder der sektorförmigen Stützen (107) hinauserstreckt.

48. Vorrichtung nach einem der vorhergehenden Ansprüche,
**dadurch gekennzeichnet, daß** Stellvorrichtungen (160, 161) zum Bewegen der Dosierschieber (86, 87) vorhanden sind, wobei die Stellvorrichtung (160) für einen Dosierschieber (86, 87) von der Stellvorrichtung (161) für einen anderen Dosierschieber (186, 187) entkoppelt werden kann.

49. Vorrichtung nach Anspruch 48,
**dadurch gekennzeichnet, daß** ein Entkopplungsmechanismus (162 bis 169) vorhanden ist, der für den Fall, daß die Auslaßöffnungen (41, 42) für Gut aus dem Vorratsbehälter (2) verschlossen sind, die Stellvorrichtungen für einen Dosierschieber von denjenigen für den anderen Schieber entkoppelt und sie auf eine gewünschte Dosierung einstellt.

## Revendications

1. Dispositif pour l'épandage de matériaux granulaire et/ou pulvérulent, plus particulièrement pour l'épandage de fertilisants, ce dispositif comprenant une trémie de chargement (2) pourvue d'au moins une ouverture de vidange (41, 42) et d'au moins un organe d'épandage (5, 6), où l'ouverture de vidange (41, 42) peut être ouverte ou refermée à souhait par une coulisse de mesure (86, 87) qui peut être déplacée en avant et en arrière le long de la paroi de trémie (37, 38) comprenant une ouverture de vidange (41, 42) et pouvant être réglée sur au moins deux positions au choix, **caractérisé en ce que** la coulisse de mesure (86, 87) sous pression porte contre le côté incurvé (37, 38) et s'étend au-delà de cette paroi (37, 38) à l'extérieur de la paroi (37, 38), sous pression porte contre le côté incurvé du support en forme de secteur (107) et est capable de rouler sur le côté incurvé (106) lorsqu'il se déplace le long de l'ouverture de vidange (41, 42) pendant le réglage.

2. Dispositif selon la revendication 1, **caractérisé par le fait que** la coulisse de mesure (86, 87) est raccordée au support en forme de secteur (107) par le moyen d'un organe de raccordement (116), où support en forme de secteur (107) monté sur un arbre d'ajustement (112) est capable de pivoter afin de permettre le déplacement de la coulisse de mesure (86, 87).

3. Dispositif selon à la revendication 2, **caractérisé par le fait que** l'arbre d'ajustement (112) est couplé à un mécanisme de réglage au moyen duquel le déchargement de la quantité désirée de matériau par unité de temps à partir de la trémie de chargement (2) jusqu'au dispositif d'épandage (5, 6), peut être contrôlé grâce à la possibilité de régler à souhait la taille de l'ouverture de vidange (41, 42) en ouvrant ou refermant cette ouverture de vidange (41, 42) sur une étendue plus ou moins grande au moyen de la coulisse de mesure (86 et 87).

4. Dispositif selon l'une des précédentes revendications, **caractérisé par le fait que** la pression sous laquelle la coulisse de mesure (86, 87) porte contre la paroi (37, 38) est exercée par un organe (104) installé entre la paroi (37, 38) et le support en forme de secteur (107), et raccordé à la coulisse de mesure (86, 87).

5. Dispositif selon la revendication 4, **caractérisé par le fait que** l'organe (104) est un ressort de traction dont l'une des extrémités est raccordée à la coulisse de mesure (86, 87) et l'autre extrémité raccordée à n'importe quelle autre partie du dispositif.

6. Dispositif selon l'une des revendications précédentes, **caractérisé par le fait que** le support en forme de secteur (107) a la forme d'un U, les jambes de ce U étant deux plaques de support en forme de secteur (108, 109) dont chacun des côtés incurvés (106) porte contre la coulisse de mesure (86, 87).

7. Dispositif selon la revendication 2 ou à l'une des revendications de 3 à 6, dans la mesure où elles dépendent de la revendication 2, **caractérisé par le fait que** l'organe de raccordement (116) placé entre la coulisse de mesure (86, 87) et le support en forme de secteur (107) est articulé avec le support en forme de secteur (107) et également articulé avec la coulisse de mesure (86, 87).

8. Dispositif selon la revendication 7, **caractérisé par le fait que** l'organe de raccordement (116), tel qu'on peut le voir sur une vue en plan, est une plaque en forme de H, dont les extrémités respectives des jambes du H orientées dans la même direction sont couplées au support en forme de secteur (107) ou à la coulisse de mesure (86, 87), où l'organe (104), maintenant la coulisse de mesure (86, 87) sous pression et la porte contre la paroi (37, 38) est couplée avec la bobine d'articulation (103), à travers laquelle l'organe de raccordement (116) est raccordé à la coulisse de mesure (86, 87), et où l'organe de raccordement (116) raccorde à une bobine d'articulation (117) s'étendant entre deux jambes du raccord en forme de H (116) dans la même direction.

9. Dispositif selon l'une des revendications précédentes, **caractérisé par le fait que** la paroi (37, 38) comprenant l'ouverture de vidange (41, 42) constitue une plaque de fond de la trémie de chargement (2).

10. Dispositif selon la revendication 9, **caractérisé par le fait que** la plaque de fond (37, 38) est une plaque plate qui s'étend au moins essentiellement perpendiculairement par rapport à l'axe de l'organe d'épandage (5, 6).

11. Dispositif selon la revendication 9 ou 10, **caractérisé par le fait que** la paroi (36, 37) constitue une plaque de fond d'un bec de sortie (3, 4) de la trémie de chargement (2).

12. Dispositif selon l'une des revendications précédentes, **caractérisé par le fait que** la coulisse de mesure (86, 87) est pourvue d'une protrusion (90) qui constitue un organe de guidage situé dans une cannelure (92) formée entre la paroi (37, 38) et une pièce de support (91) figurant sur le dessus.

13. Dispositif selon la revendication 12, **caractérisé par le fait que** la pièce de support (91) est rectangulaire et qu'au moins un des côtés est pourvu d'une cannelure (92) à l'intérieure de laquelle la protrusion (90) de la coulisse de mesure (86, 87) est montée d'une façon lui permettant de coulisser.

14. Dispositif selon la revendication 12 ou 13, **caractérisé par le fait qu'**un côté de la protrusion (90), comme le présente une vue en plan, coïncide au moins essentiellement avec un côté de l'ouverture de vidange (41, 42) et son extension.

15. Dispositif selon l'une des revendications précédentes, **caractérisé par le fait qu'**il comprend au moins deux organes d'épandage (5, 6) correspondant chacun à un des becs de sortie (3, 4) de la trémie de chargement (2) comprenant au moins deux ouvertures de vidange (41, 42), où les coulisses de mesure (86, 87), fonctionnant chacune conjointement avec les ouvertures de vidange (41, 42) dans les becs des vidanges (3, 4) respectifs, s'appuient contre les parois respectives (37, 38) et contre le côté incurvé (106) d'un support en forme de secteur (107), où les supports en forme de secteur (107) des deux coulisses de mesure (86, 87) sont raccordées à un seul et même arbre d'ajustement (112) et sont réglables simultanément au moyen de l'arbre d'ajustement (112).

16. Dispositif selon la revendication 15, **caractérisé par le fait que** les deux coulisses de mesure (86, 87) et les supports en forme de secteur (107) et les ouvertures de vidange (41, 42) correspondants sont façonnés et disposés symétriquement par rapport à un plan s'étendant dans la direction normale du déplacement du dispositif et sont situés de manière centrale entre les deux becs de sortie (3, 4) ou des deux ouvertures de vidange (41, 42).

17. Dispositif selon la revendication 15 ou 16, **caractérisé par le fait que** les pièces de support (91) pourvues d'une cannelure (92) pour le guidage des protrusions (90) de la coulisse de mesure (86, 87) sont alignées les unes par rapport aux autres et symétriquement formées de part et d'autre du plan central à mi-distance entre les deux ouvertures de vidange (41, 42).

18. Dispositif selon les revendications 15, 16 ou 17, **caractérisé par le fait que** les deux organes d'épandage (5, 6) et les ouvertures de vidange (41, 42) correspondantes sont façonnées et disposées, et que les organes d'épandage (5, 6) sont rotatifs de façon à ce que chacun des deux organes d'épandage (5, 6) puisse chacun disperser le matériau au-dessus de la même bande lorsque le dispositif se déplace en fonctionnement sur la surface à couvrir.

19. Dispositif selon l'une des précédentes revendications, **caractérisé par le fait que** le côté de la coulisse de mesure (86, 87) qui fonctionne conjointement avec l'ouverture de vidange (41, 42) pour ouvrir ou refermer cette dernière dans une certaine mesure, est pourvue d'enclaves ou d'indentations (95, 96, 97) qui forment, au moins après la fermeture partielle de l'ouverture de vidange (41, 42),en combinaison avec des parties des côtés de l'ouverture de vidange, deux ou plusieurs petits passages (66, 67, 68) situés côte à côte.

20. Dispositif selon la revendication 19, **caractérisé par le fait que** les indentations (95, 96, 97), telles qu'observées à angles droits par rapport à la coulisse de mesure (86, 87), ont une forme de V, où les deux cotés divergeant de la forme en V faisant face au côté de fermeture de l'ouverture de vidange (41, 42) sont disposés de façon à ce que lorsque la vidange est fermée, la portion la plus profonde de chaque indentation se déplace au-delà du côté de fermeture de l'ouverture de vidange (41, 42).

21. Dispositif selon les revendications 19 ou 20, **caractérisé par le fait que** les indentations (95, 96, 97) situées côte à côte sont de taille différente, depuis une vue perpendiculaire au déplacement de la coulisse de mesure (86, 87).

22. Dispositif selon la revendication 21, **caractérisé par le fait que** la coulisse de mesure (86, 87) comprend trois indentations (95, 96, 97), celle du centre (96) ayant une largeur inférieure aux deux indentations adjacentes (95, 97) qui ont une largeur à peu près identique.

23. Dispositif selon la revendication 22, **caractérisé par le fait que** l'indentation centrale (96) a une largeur mesurant approximativement la moitié de la largeur des indentations adjacentes (95, 97).

24. Dispositif selon l'une des revendications 19 à 23, **caractérisé par le fait que** les indentations (95, 96, 97) et les ouvertures de vidange (41, 42) sont situées sur une courbe autour de l'axe de rotation des organes d'épandage (5, 6) avec la partie creuse de la courbe faisant face à l'axe de rotation.

25. Dispositif selon la revendication 24, **caractérisé par le fait que** mesuré dans la direction radiale, le centre de l'ouverture de vidange (41, 42) est situé de façon approximativement centrale par rapport à l'axe de rotation de l'organe d'épandage (5, 6).

26. Dispositif selon l'une des revendications de 19 à 25, **caractérisé par le fait que** l'ouverture de vidange (41, 42) située à l'intérieur du bec de sortie (3, 4) de la trémie de chargement (2) s'étend autour de l'axe de rotation de l'organe d'épandage (5, 6) sur un angle approximativement supérieur à 80° et approximativement inférieur à 140°.

27. Dispositif selon la revendication 26, **caractérisé par le fait que** l'ouverture de vidange (41, 42) s'étend à partir d'un coté du plan qui comprend l'axe de rotation de l'organe d'épandage (5, 6) et qui s'étend dans la direction normale du déplacement du dispositif pendant son fonctionnement plus loin qu'il ne s'étend depuis l'autre côté de ce plan.

28. Dispositif selon la revendication 27, dans là mesure ou elle est subordonnée à la revendication 15, **caractérisé par le fait que** les ouvertures de vidange (41, 42) des deux becs de sortie (3, 4) s'étendent à partir des cotés, détournés l'un de l'autre, des plans respectifs comprenant les axes de rotation des organes d'épandage (5, 6) plus loin qu'elles ne s'étendent depuis les cotés du plan se faisant face.

29. Dispositif selon l'une des revendications précédentes, **caractérisé par le fait que** l'organe d'épandage (5, 6) comprend au moins une lame d'épandage (18) dont l'extrémité intérieure, qui fait face à l'axe de l'organe d'épandage (5, 6) et qui transite par l'ouverture de vidange (41, 42) pendant le fonctionnement, est plus basse que la partie extérieure de la lame d'épandage (18) qui est détourné de l'axe de rotation.

30. Dispositif selon la revendication 29, **caractérisé par le fait que** la partie externe de la lame d'épandage (18) a un coté supérieur s'étendant au moins virtuellement à la perpendiculaire par rapport à l'axe de rotation de l'organe d'épandage (5, 6) et est pourvu d'une bride saillante (19) s'étendant dans la même direction que la direction de rotation normale de l'organe d'épandage (5, 6).

31. Dispositif selon la revendication 29 ou 30, **caractérisé par le fait que** le côté supérieur de la partie interne abaissée de la lame d'épandage (18) s'étend obliquement vers le bas, dans la direction de l'axe de l'organe d'épandage (5, 6).

32. Dispositif selon l'une des revendications 29 à 31, **caractérisé par le fait que** l'organe d'épandage (5, 6) comprend une plaque conique s'étendant vers le haut, tel qu'on peut le voir depuis l'axe de rotation de l'organe d'épandage (5, 6) et que sur cette plaque se trouve une pluralité de lames d'épandage (18) dont les extrémités internes sont raccordées à une partie centrale redressée (76) de l'organe d'épandage (5, 6).

33. Dispositif selon l'une des revendications 29 à 32, **caractérisé par le fait que** la partie interne abaissée de la lame d'épandage (18), telle que mesurée dans la direction radiale, est plus courte que la partie externe de la lame d'épandage (18).

34. Dispositif selon l'une des revendications précédentes, **caractérisé par le fait qu'**entre les parois (37, 38) dans lesquelles sont situées les ouvertures de vidange (41, 42), et l'organe d'épandage (5, 6), est disposée une bride de protection (121) s'étendant au moins approximativement autour d'une partie de l'ouverture de vidange (41, 42) tel qu'on peut le voir depuis une vue du dessus.

35. Dispositif selon la revendication 34, **caractérisé par le fait que** la surface supérieure de la bride de protection (121) est connectée au moins approximativement à l'ouverture de vidange (41, 42) qui est écartée de l'axe de rotation de l'organe d'épandage (5, 6) ou du centre du bec de la vidange (3, 4).

36. Dispositif selon la revendication 35, **caractérisé par le fait que** la bride de protection (121) orientée vers le bas diverge de l'axe de rotation de l'organe d'épandage (5, 6) et a son bord inférieur situé à une courte distance au-dessus du côté supérieur de la partie interne abaissée de la lame d'épandage (18).

37. Dispositif selon l'une des revendications 34 à 36, **caractérisé par le fait que** la bride de protection (121) est pourvue d'une pièce droite (124) située sur le côté de l'ouverture de vidange (41, 42) à partir duquel la lame d'épandage (18) se déplace au-delà de l'ouverture de vidange (41, 42), avec cette partie droite (124) s'étendant au moins virtuellement parallèlement au plan qui comprend l'axe de rotation de l'organe d'épandage (5, 6) et s'étend dans la direction normale du déplacement du dispositif.

38. Dispositif selon l'une des revendications 34 à 37, **caractérisé par le fait que** la bride de protection (121) a une partie au moins essentiellement radiale (125) qui se situe du côté de l'ouverture de vidange (41, 42) qui est la dernière à être dépassée par la lame d'épandage (18) lorsque celle-ci se déplace sous l'ouverture de vidange (41, 42).

39. Dispositif selon l'une des revendications précédentes, **caractérisé par le fait que** près de l'ouverture de vidange (41, 42) située à l'intérieur du bec de la vidange (3, 4), se trouve un organe de brassage (130) monté de façon à pouvoir tourner sur un axe (132) et relié excentriquement à l'axe (7) de l'organe d'épandage (5, 6), où l'organe de brassage (130) comprend des moyens de brassages (137) s'étendant essentiellement verticalement à l'intérieur du bec de la vidange (3, 4) de la trémie de chargement (2).

40. Dispositif selon la revendication 39, **caractérisé par le fait que** les organes d'épandage (137) sont triangulaires en section et raccordés, au moyen de bras porteurs (136) à un élément porteur (133) monté de façon à pouvoir tourner sur un axe (132).

41. Dispositif selon la revendication 39 ou 40, **caractérisé par le fait que**, de façon centrale entre deux bras porteurs (136) se trouve un bras mélangeur (138) incliné obliquement vers le bas.

42. Dispositif selon l'une des revendications 39 à 41, **caractérisé par le fait que** l'organe de brassage (130) comprend un bras mélangeur (139) qui s'étend au moins essentiellement à l'horizontale, à l'extrémité duquel une pièce (140) s'étend verticalement le long du mur du bec de la vidange (3, 4).

43. Dispositif selon l'une des revendications 39 à 42, **caractérisé par le fait que** l'axe (7) de l'organe d'épandage (5, 6) s'étend à travers le fond de la trémie de chargement et est relié à l'organe brassage (130) dans le bec de sortie (3, 4), où l'axe (7) est situé dans un orifice (131) dans le fond du bec de sortie (3, 4), dont l'orifice (131) est scellé au moyen d'un anneau (144) qui s'adapte autour de l'axe (7) de l'organe d'épandage (5, 6) et est placé dans une cannelure (92) située dans la pièce de support (91) pour la protrusion (90) de la coulisse de mesure (85, 86).

44. Dispositif selon l'une des revendications précédentes, **caractérisé par le fait qu'**autour d'au moins une partie de l'organe d'épandage (5, 6) se trouve une bride de protection (146, 147), et sur la partie supérieure de cette bride de protection (146, 147) est située une plaque de protection (149) s'étendant sur au moins une portion de la surface supérieure de l'organe d'épandage (5, 6).

45. Dispositif selon l'une des revendications précédentes, dans la mesure où elles sont subordonnées à la revendication 15, **caractérisé par le fait qu'**autour des côtés des organes d'épandage (5, 6) qui sont l'un en face de l'autre, se trouvent des brides de protection (146, 147) sur la surface supérieure desquelles se trouve une plaque de protection (149) qui se prolonge au-delà des organes d'épandage (5, 6) se faisant face et s'étend entre les deux becs de sortie (3, 4) sous lesquels les deux organes d'épandage (5, 6) sont situés, et que, sur les côtés des becs de vidange (3, 4) placées dos à dos, se trouvent des plaques de protection (149) qui sont reliées à au moins une partie de la circonférence de l'ouverture de vidange (3, 4) et qui sont dans une position surélevée par rapport au côté inférieur des becs de sortie (3, 4).

46. Dispositif selon la revendication 44 ou 45, **caractérisé par le fait que** les plaques de protection latérales (146, 147) situées sur l'avant des organes d'épandage (5, 6) sont munies de brides (152) qui sont orientées vers le bas et qui s'étendent jusqu'au niveau du côté inférieur de l'organe d'épandage (5, 6).

47. Dispositif selon l'une des revendications précédentes, **caractérisé par le fait qu'**un organe de protection flexible (158) orienté vers le bas est placé sur l'arbre d'ajustement (112) pour les supports en forme de secteur (107), où cet organe de protection (158) s'étend depuis l'arbre d'ajustement (112) jusqu'au-delà de l'avant des plaques de réglage (146, 147) et/ou des supports en forme de secteur (107).

48. Dispositif selon l'une des revendications précédentes, **caractérisé par le fait que** pour régler les coulisses de mesure (86, 87) il y a des moyens de réglage (160, 161), où le moyen de réglage (160) d'une coulisse de mesure (86, 87) peut être séparé de l'instrument de réglage (161) pour être raccordé à une autre coulisse de mesure (86, 87).

49. Dispositif selon la revendication 48, **caractérisé par** la présence d'un mécanisme de désaccoupler (162 - 169) qui, à condition que les ouvertures de vidange (41, 42) qui laissent passer le matériau s'écoulant depuis la trémie de chargement (2) soient refermées, permet de désaccoupler les moyens de réglage de la coulisse de mesure de ceux d'une autre coulisse et de les ajuster à un dosage désiré.
